(19) Europäisches Patentamt

European Patent Office

Office européen des brevets

(11) **EP 4 443 760 A1**

(12) **EUROPEAN PATENT APPLICATION**
published in accordance with Art. 153(4) EPC

(43) Date of publication:
**09.10.2024 Bulletin 2024/41**

(21) Application number: **22914198.1**

(22) Date of filing: **12.12.2022**

(51) International Patent Classification (IPC):
***H04B 7/0456*** (2017.01)

(52) Cooperative Patent Classification (CPC):
**H04B 7/0417; H04B 7/0452; H04B 7/0456; H04B 7/06**

(86) International application number:
**PCT/CN2022/138410**

(87) International publication number:
**WO 2023/124943 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 CN 202111672970**

(71) Applicant: **Huawei Technologies Co., Ltd. Shenzhen, Guangdong 518129 (CN)**

(72) Inventors:
• **XU, Jun**
 **Shenzhen, Guangdong 518129 (CN)**

• **WANG, Hanqing**
 **Shenzhen, Guangdong 518129 (CN)**
• **ZHANG, Xiaoyu**
 **Shenzhen, Guangdong 518129 (CN)**
• **PANG, Jiyong**
 **Shenzhen, Guangdong 518129 (CN)**
• **JIN, Huangping**
 **Shenzhen, Guangdong 518129 (CN)**

(74) Representative: **Grünecker Patent- und Rechtsanwälte**
**PartG mbB**
**Leopoldstraße 4**
**80802 München (DE)**

(54) **METHOD AND APPARATUS FOR DETERMINING PRECODING INDICATION MODE**

(57)   A precoding indication manner determining method and an apparatus are provided. The method includes: A RAN device obtains information about an uplink channel of a terminal device; then, the RAN device determines a scheduled uplink bandwidth and a quantity of uplink data flows of the terminal device based on the information about the uplink channel of the terminal device; further, the RAN device determines an uplink precoding indication manner of the terminal device based on the scheduled uplink bandwidth and the quantity of uplink data flows of the terminal device; and subsequently, the RAN device sends first information to the terminal device, where the first information indicates the uplink precoding indication manner. According to the method, the uplink precoding indication manner can be flexibly and accurately determined for the terminal device. This can ensure accuracy of uplink precoding used by the terminal device while reducing unnecessary indication overheads.

FIG. 4

## Description

## CROSS-REFERENCE TO RELATED APPLICATIONS

This application claims priority to Chinese Patent Application No. 202111672970.2, filed with the China National Intellectual Property Administration on December 31, 2021 and entitled "PRECODING INDICATION MANNER DETERMINING METHOD AND APPARATUS", which is incorporated herein by reference in its entirety.

## TECHNICAL FIELD

This application relates to the field of communication technologies, and in particular, to a precoding indication manner determining method and an apparatus.

## BACKGROUND

In a wireless communication system, a massive antenna array (including dozens or even hundreds of antenna elements) is disposed on a base station side to simultaneously serve a plurality of users within cell coverage. A massive multiple-input multiple-output (massive multiple-input multiple-output, Massive MIMO) technology can be used to significantly improve spectral efficiency and energy efficiency of the system.

In an uplink multiple user (multiple user, MU)-MIMO system, uplink precoding plays an important role in a capacity and a spectrum of the communication system. There are two uplink transmission manners in an existing 5th generation (5th generation, 5G) communication protocol: codebook based uplink transmission (codebook based UL transmission) and non-codebook based uplink transmission (non-codebook based UL transmission). In the two solutions, precision of uplink precoding indicated by the base station is low. Another high-precision indication manner is an uplink subband precoding precise indication based on a beamformed (beamformed, BF) channel state information-reference signal (channel state information-reference signal, CSI-RS). In the foregoing three uplink precoding indication manners, signaling overheads of different degrees are generated, and different indication precision is obtained.

Therefore, how to ensure accuracy of uplink precoding used by a terminal device while reducing unnecessary indication overheads is an urgent technical problem to be resolved currently.

## SUMMARY

A precoding indication manner determining method and an apparatus are provided, so that an uplink precoding indication manner can be flexibly and accurately determined for a terminal device. This can ensure accuracy of uplink precoding used by the terminal device while reducing unnecessary indication overheads.

According to a first aspect, an embodiment of this application provides a precoding indication manner determining method. The method may be performed by a processor of a RAN device, or may be performed by a chip corresponding to the processor. This is not limited herein. Specifically, the following steps may be performed. A RAN device obtains information about an uplink channel of a terminal device; the RAN device determines a scheduled uplink bandwidth and a quantity of uplink data flows of the terminal device based on the information about the uplink channel of the terminal device; the RAN device determines an uplink precoding indication manner of the terminal device based on the scheduled uplink bandwidth and the quantity of uplink data flows of the terminal device; and the RAN device sends first information to the terminal device, where the first information indicates the uplink precoding indication manner.

The RAN device may first determine the scheduled uplink bandwidth and the quantity of uplink data flows of the terminal device based on the information about the uplink channel of the terminal device. Further, the RAN device flexibly determines the to-be-used uplink precoding indication manner for the terminal device based on the scheduled uplink bandwidth and the quantity of uplink data flows of the terminal device, and notifies the terminal device of the uplink precoding indication manner. In this way, the terminal device may determine to-be-used uplink precoding in the uplink precoding indication manner, to ensure accuracy of the uplink precoding of the terminal device.

It should be noted that the RAN device may first determine the scheduled uplink bandwidth, the quantity of uplink data flows, and information about the uplink precoding of the terminal device based on the information about the uplink channel of the terminal device, and this may be implemented in the following manner: The RAN device needs to obtain information about uplink channels of all terminal devices managed by the RAN device, so that the RAN device may combine the information about the uplink channels of all the terminal devices, and determine a scheduled uplink bandwidth and a quantity of uplink data flows of each terminal device according to a specified optimization algorithm. The specified optimization algorithm is not specifically limited in this application, and may be specified in an existing protocol.

In a possible implementation, that the RAN device determines an uplink precoding indication manner of the terminal device based on the scheduled uplink bandwidth and the quantity of uplink data flows of the terminal device includes: The RAN device determines, based on the scheduled uplink bandwidth and the quantity of uplink data flows of the terminal device and according to a first rule, the uplink precoding indication manner used by the terminal device. The first rule includes: when the scheduled uplink bandwidth of the terminal device is less than a first threshold and the quantity of uplink data flows of the terminal device is less than a second threshold, determining that the terminal device uses a wideband codebook indication manner; or when the scheduled uplink bandwidth of the terminal device is greater than a first threshold and the quantity of uplink data flows of the terminal device is less than a second threshold, determining that the terminal device uses a subband codebook indication manner; or when the scheduled uplink bandwidth of the terminal device is less than a first threshold and the quantity of uplink data flows of the terminal device is greater than a second threshold, determining that the terminal device uses a wideband precise indication manner; or when the scheduled uplink bandwidth of the terminal device is greater than a first threshold and the quantity of uplink data flows of the terminal device is greater than a second threshold, determining that the terminal device uses a subband precise indication manner; or when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

In this implementation, the RAN device may flexibly determine the uplink precoding indication manner for the terminal device based on the scheduled uplink bandwidth of the terminal device and the quantity of uplink data flows of the terminal device and according to the first rule. This can ensure accuracy of uplink precoding used by the terminal device while reducing unnecessary indication overheads. Therefore, according to the method, an uplink precoding indication manner corresponding to each case may be planned in detail for different cases of the terminal device, so that the RAN device may indicate accurate uplink precoding to the terminal device in the uplink precoding indication manner.

Specifically, when the scheduled uplink bandwidth of the terminal device is less than the first threshold and the quantity of uplink data flows of the terminal device is less than the second threshold, that is, when the uplink bandwidth and the quantity of data flows that are used by the terminal device are small, the terminal device uses the wideband codebook indication manner. This can ensure precision of to-be-used uplink precoding learned of by the terminal device, and can reduce system overheads. Alternatively, when the scheduled uplink bandwidth of the terminal device is greater than the first threshold and the quantity of uplink data flows of the terminal device is less than the second threshold, that is, when the uplink bandwidth used by the terminal device is large but the quantity of uplink data flows is small, the terminal device uses the subband codebook indication manner. This can greatly improve, with low indication overheads, precision of uplink precoding used by the terminal device. Alternatively, when the scheduled uplink bandwidth of the terminal device is less than the first threshold and the quantity of uplink data flows of the terminal device is greater than the second threshold, that is, when the uplink bandwidth used by the terminal device is small but the quantity of uplink data flows is large, the terminal device uses the wideband precise indication manner. This can greatly improve, with low indication overheads, precision of uplink precoding used by the terminal device. Alternatively, when the scheduled uplink bandwidth of the terminal device is greater than the first threshold and the quantity of uplink data flows of the terminal device is greater than the second threshold, that is, when both the uplink bandwidth and the quantity of uplink data flows that are used by the terminal device are large, the terminal device uses the subband precise indication manner. This can ensure that the terminal device uses uplink precoding with highest precision.

Alternatively, when the scheduled uplink bandwidth of the terminal device is equal to the first threshold and the quantity of uplink data flows of the terminal device is less than the second threshold, that is, when the scheduled uplink bandwidth does not exceed the first threshold and the quantity of uplink data flows is small, the terminal device may use the wideband codebook indication manner or the subband codebook indication manner. This can ensure precision of to-be-used uplink precoding learned of by the terminal device, and can reduce system overheads. Alternatively, when the scheduled uplink bandwidth of the terminal device is less than the first threshold and the quantity of uplink data flows of the terminal device is equal to the second threshold, that is, when the scheduled uplink bandwidth is small and the quantity of uplink data flows does not exceed the second threshold, the terminal device may use the wideband codebook indication manner or the wideband precise indication manner. This ensures precision of uplink precoding used by the terminal device. Alternatively, when the scheduled uplink bandwidth of the terminal device is equal to the first threshold and the quantity of uplink data flows of the terminal device is greater than the second threshold, that is, when the scheduled uplink bandwidth does not exceed the first threshold and the quantity of uplink data flows is large, the terminal device uses the wideband precise indication manner or the subband precise indication manner. This ensures precision of uplink precoding used by the terminal device. Alternatively, when the scheduled uplink bandwidth of the terminal device is greater than the first threshold and the quantity of uplink data flows of the terminal device is equal to the second threshold, that is, when the scheduled uplink bandwidth is large and the quantity of uplink data flows does not exceed the second threshold, the terminal device may use the subband codebook indication manner or the subband precise indication manner. This can ensure that the terminal device uses uplink precoding with highest precision. Alternatively, when the scheduled uplink bandwidth of the terminal device is equal to the first threshold and the quantity of uplink data flows of the terminal device is equal to the second threshold, that is, when each of the scheduled uplink bandwidth and the quantity of uplink data flows is equal to a corresponding threshold, the terminal device may use any one of the wideband codebook indication manner, the subband codebook indication manner, the wideband precise indication manner, and the subband precise indication manner. This can ensure precision of uplink precoding used by the terminal device.

It should be noted that the first threshold indicates a threshold of the scheduled uplink bandwidth, and the second threshold indicates a threshold of the quantity of uplink data flows. The threshold of the scheduled uplink bandwidth and the threshold of the quantity of uplink data flows may be specified in a standard protocol, or the threshold of the scheduled uplink bandwidth and the threshold of the quantity of uplink data flows may be agreed upon by the RAN device and the terminal device through negotiation, or the threshold of the scheduled uplink bandwidth and the threshold of the quantity of uplink data flows may be set based on an actual requirement. This is not specifically limited in this application.

In a possible implementation, the method further includes: The RAN device determines the uplink precoding of the terminal device based on the information about the uplink channel of the terminal device.

In this implementation, the RAN device may further obtain optimal uplink subband precoding of each terminal device through calculation based on the information about the uplink channels of all the terminal devices managed by the RAN device. If the RAN device precisely indicates the optimal uplink subband precoding to the terminal device, it is inevitable that performance is best. However, in this case, indication overheads are very high. In addition, performance gains of the subband precise indication manner are sometimes smaller than those of the wideband codebook indication manner, the subband codebook indication manner, and the wideband precise indication manner. Therefore, it is unnecessary to use the subband precise indication manner. In this way, although the RAN device can obtain the optimal uplink precoding of the terminal device through calculation, the RAN device further needs to determine, based on the scheduled uplink bandwidth and the quantity of data flows of the terminal device, a specific uplink precoding indication manner that is used by the terminal device and that has highest cost-effectiveness.

In a possible implementation, that a RAN device obtains information about an uplink channel of a terminal device includes: The RAN device receives a channel sounding reference signal (sounding reference signal, SRS) from the terminal device; and the RAN device determines the information about the uplink channel of the terminal device based on the SRS sent by the terminal device.

In this implementation, the RAN device may effectively determine the information about the uplink channel from the terminal device to the RAN device based on the channel sounding reference signal sent by the terminal device.

In a possible implementation, when the RAN device determines that the precoding indication manner used by the terminal device is the wideband codebook indication manner or the subband codebook indication manner, the first information includes first downlink control information DCI, and the first DCI carries first indication information indicating an index of a codebook used by the terminal device.

In this implementation, when determining that the precoding indication manner used by the terminal device is the wideband codebook indication manner or the subband codebook indication manner, the RAN device may indicate, to the terminal device by using the first DCI in the first information, the index of the codebook used by the terminal device. This can ensure accuracy of the codebook used by the terminal device.

In a possible implementation, when the RAN device determines that the precoding indication manner used by the terminal device is the wideband precise indication manner or the subband precise indication manner, the first information includes configuration information of an aperiodic channel state information-reference signal CSI-RS. The CSI-RS is a downlink reference signal, and the CSI-RS is used by the terminal device to determine the to-be-used uplink precoding.

In this implementation, when determining that the precoding indication manner used by the terminal device is the wideband precise indication manner or the subband precise indication manner, the RAN device may send the configuration information of the CSI-RS to the terminal device by using the first information. When the RAN device sends the CSI-RS to the terminal device, the terminal device can accurately receive the CSI-RS. Further, the terminal device may obtain, by using the received CSI-RS, the uplink precoding used by the terminal device, to ensure accuracy of the uplink precoding used by the terminal device.

In a possible implementation, the first DCI is used to notify the RAN device whether to send the CSI-RS.

In this implementation, before sending the CSI-RS to the terminal device, the RAN device further notifies, by using the first DCI, the terminal device whether the RAN device sends the CSI-RS, so that the terminal device makes a receiving-related preparation before receiving the CSI-RS, for example, receives a channel and a resource that are to be used. This can ensure that the CSI-RS can be accurately received, and can avoid a waste of system resources caused when the terminal device monitors the CSI-RS for long time.

In a possible implementation, the first DCI carries 2-bit information, and the 2-bit information indicates the uplink precoding indication manner used by the terminal device.

In this implementation, the RAN device may specifically indicate, to the terminal device by using the 2-bit information carried in the first DCI in the first information, the uplink precoding indication manner that is correspondingly used. It should be understood that this manner is an explicit indication manner. Therefore, the terminal device may directly and accurately learn of the to-be-used uplink precoding indication manner based on the 2-bit information.

In a possible implementation, the first DCI further carries the scheduled uplink bandwidth and the quantity of uplink data flows of the terminal device.

In this implementation, the RAN device may further enable, by using the scheduled uplink bandwidth and the quantity of uplink data flows of the terminal device that are carried in the first DCI, the terminal device to obtain the scheduled uplink bandwidth and the quantity of uplink data flows of the terminal device. It should be understood that this manner is an implicit indication manner. Therefore, the terminal device may alternatively determine, based on the scheduled uplink bandwidth and the quantity of uplink data flows of the terminal device and according to the first rule, the uplink precoding indication manner used by the terminal device. This can reduce overheads on the RAN device side, and can ensure accuracy of the uplink precoding indication manner used by the terminal device.

In a possible implementation, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In this implementation, when determining that the terminal device uses the wideband/subband precise indication manner, the RAN device may independently indicate the quantity of uplink data flows of the terminal device by adding the field to the DCI. Alternatively, the RAN device may indicate the quantity of uplink data flows of the terminal device by using the TPMI field in the existing first DCI. Therefore, in this manner, the corresponding quantity of uplink data flows can be flexibly and accurately indicated to the terminal device.

In a possible implementation, when the RAN device determines that the precoding indication manner used by the terminal device is the wideband precise indication manner, the method further includes: The RAN device determines M subbands from a plurality of subbands in the scheduled uplink bandwidth of the terminal device, where M is an integer greater than 0; the RAN device obtains first precoding on each of the M subbands; the RAN device processes a to-be-sent CSI-RS on each subband by using the first precoding on each subband, to obtain a first signal; and the RAN device sends the first signal to the terminal device on the M subbands.

In this implementation, when determining that the precoding indication manner used by the terminal device is the wideband precise indication manner, the RAN device sends the processed first signal to the terminal device by using the M subbands in the scheduled uplink bandwidth of the terminal device, that is, accurately indicates the corresponding uplink precoding for the terminal device by using the M subbands. This ensures accuracy of the uplink precoding used by the terminal device.

In a possible implementation, the M subbands in the scheduled uplink bandwidth are agreed upon by the RAN device and the terminal device, or the M subbands are subbands with a largest signal-to-noise ratio in the plurality of subbands in the scheduled uplink bandwidth.

In this implementation, the M subbands selected from the scheduled uplink bandwidth of the terminal device may be agreed upon by the RAN device and the terminal device through negotiation in advance, so that both the RAN device and the terminal device know the selected M subbands. Alternatively, the M subbands whose signal-to-noise ratios rank high are selected by ranking signal-to-noise ratios of the subbands in the scheduled uplink bandwidth of the terminal device in descending order. Generally, a larger signal-to-noise ratio indicates lower noise, that is, indicates less impact of channel noise on transmission. This can ensure higher accuracy of uplink precoding used by the terminal device.

According to a second aspect, an embodiment of this application provides a precoding indication manner determining method. The method may be performed by a processor of a RAN device, or may be performed by a chip corresponding to the processor. This is not limited herein. Specifically, the following steps may be performed. The RAN device obtains information about an uplink channel of a terminal device; the RAN device determines a scheduled uplink bandwidth and a quantity of uplink data flows of the terminal device based on the information about the uplink channel of the terminal device; and the RAN device sends first information to the terminal device, where the first information carries the scheduled uplink bandwidth and the quantity of uplink data flows of the terminal device.

The RAN device may determine the scheduled uplink bandwidth and the quantity of uplink data flows of the terminal device based on the information about the uplink channel of the terminal device, and further send, to the terminal device, the first information carrying the scheduled uplink bandwidth and the quantity of uplink data flows of the terminal device. In this way, the terminal device can autonomously determine a to-be-used uplink precoding indication manner based on the first information, to accurately determine corresponding uplink precoding.

In a possible implementation, the first information includes first downlink control information DCI, and the first DCI carries the scheduled uplink bandwidth and the quantity of uplink data flows of the terminal device.

In a possible implementation, the method further includes: The RAN device determines, based on the scheduled uplink bandwidth and the quantity of uplink data flows of the terminal device, the uplink precoding indication manner used by the terminal device. In this implementation, the RAN device may flexibly determine, based on the scheduled uplink bandwidth and the quantity of uplink data flows of the terminal device, the uplink precoding indication manner used by the terminal device, and subsequently may assist, in the uplink precoding indication manner, the terminal device in accurately determining uplink precoding.

In a possible implementation, when the RAN device determines that the precoding indication manner used by the terminal device is a wideband codebook indication manner or a subband codebook indication manner, the first DCI carries first indication information indicating an index of a codebook used by the terminal device.

In a possible implementation, when the RAN device determines that the precoding indication manner used by the terminal device is a wideband precise indication manner or a subband precise indication manner, the first information includes configuration information of an aperiodic channel state information-reference signal CSI-RS. The CSI-RS is a downlink reference signal, and the CSI-RS is used by the terminal device to determine the to-be-used uplink precoding.

In a possible implementation, the first downlink control information is used to notify the RAN device whether to send the CSI-RS.

In a possible implementation, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In a possible implementation, when the RAN device determines that the precoding indication manner used by the terminal device is the wideband precise indication manner, the method further includes: The RAN device determines M subbands from a plurality of subbands in the scheduled uplink bandwidth of the terminal device, where M is an integer greater than 0; the RAN device obtains first precoding on each of the M subbands; the RAN device processes a to-be-sent CSI-RS on each subband by using the first precoding on each subband, to obtain a first signal; and the RAN device sends the first signal to the terminal device on the M subbands.

In a possible implementation, the M subbands in the scheduled uplink bandwidth are agreed upon by the RAN device and the terminal device, or the M subbands are subbands with a largest signal-to-noise ratio in the plurality of subbands in the scheduled uplink bandwidth.

For effects of the possible implementations in the second aspect, refer to the effects of the possible implementations in the first aspect. Details are not described herein again.

According to a third aspect, an embodiment of this application provides a precoding indication manner determining method. The method may be performed by a processor of a terminal device, or may be performed by a chip corresponding to the processor. This is not limited herein. Specifically, the following steps may be performed. The terminal device receives first information from a RAN device, where the first information indicates a corresponding precoding indication manner; the terminal device obtains, based on the first information, the uplink precoding indication manner used by the terminal device; and the terminal device determines uplink precoding in the uplink precoding indication manner.

The terminal device receives, from the RAN device, the first information indicating the precoding indication manner of the terminal device, so that the terminal device may accurately obtain, based on the first information, the uplink precoding indication manner used by the terminal device, and the terminal device may further accurately determine the to-be-used uplink precoding in the uplink precoding indication manner.

In a possible implementation, before that the terminal device receives first information from a RAN device, the method further includes: The terminal device sends a channel sounding reference signal SRS to the RAN device, where the SRS is used to determine information about an uplink channel of the terminal device.

In this implementation, before the terminal device receives the first information from the RAN device, the terminal device sends the channel sounding reference signal SRS to the RAN device, so that the RAN device can accurately determine the information about the uplink channel from the terminal device to the RAN device.

In a possible implementation, the method further includes: The first information includes first downlink control information DCI, where the first DCI includes a preset field, and the preset field indicates a quantity of uplink data flows of the terminal device; or the first DCI includes a transmitted precoding matrix indicator TPMI field, and the first field indicates a quantity of uplink data flows of the terminal device.

In this implementation, when the terminal device uses a wideband/subband precise indication manner, the terminal device receives the first information, and may accurately learn of, by using the preset field in the first DCI in the first information, the quantity of uplink data flows transmitted by the terminal device, or may accurately learn of, based on the TPMI field in the first DCI in the first information, the quantity of uplink data flows transmitted by the terminal device.

In a possible implementation, the first DCI further carries a scheduled uplink bandwidth and the quantity of uplink data flows that are used by the terminal device. In this implementation, the terminal device may accurately obtain the scheduled uplink bandwidth and the quantity of uplink data flows of the terminal device, to further determine the uplink precoding after obtaining the uplink precoding indication manner.

In a possible implementation, the first DCI carries 2-bit information, and the 2-bit information indicates the uplink precoding indication manner of the terminal device.

In this implementation, the RAN device can flexibly and accurately indicate the uplink precoding indication manner to the terminal device by using low signaling overheads.

In a possible implementation, the first DCI further carries first indication information indicating an index of a codebook used by the terminal device.

In this implementation, if the corresponding uplink precoding indication manner obtained by the terminal device by using the first information is a wideband codebook indication manner or a subband codebook indication manner, the terminal device may accurately learn of the to-be-used codebook by using the first DCI in the first information.

In a possible implementation, the first information further includes configuration information of an aperiodic channel state information-reference signal CSI-RS, and the CSI-RS is used by the terminal device to determine the to-be-used uplink precoding.

In this implementation, if the corresponding uplink precoding indication manner obtained by the terminal device by using the first information is a wideband precise indication manner or a subband precise indication manner, the terminal device receives the configuration information of the CSI-RS in the first information from the RAN device. In this way, when the RAN device sends the CSI-RS to the terminal device, the terminal device can accurately receive the CSI-RS. Further, the terminal device may obtain, by using the received CSI-RS, the uplink precoding used by the terminal device, to ensure accuracy of the uplink precoding used by the terminal device.

In a possible implementation, the first DCI is further used to notify the RAN device whether to send the CSI-RS.

In this implementation, before receiving the CSI-RS from the RAN device, the terminal device needs to determine, by using the first DCI sent by the RAN device, whether the RAN device sends the CSI-RS, so that the terminal device makes a receiving-related preparation before receiving the CSI-RS, for example, a channel and a resource that are to be used. This can ensure that the CSI-RS can be accurately received, and can avoid a waste of system resources caused when the terminal device monitors the CSI-RS for long time.

In a possible implementation, when the terminal device determines that the to-be-used precoding indication manner is the wideband precise indication manner, the method further includes: The terminal device receives M second signals sent by the RAN device, where the M second signals are signals obtained by performing downlink channel processing on M first signals, the M first signals are obtained by the RAN device by processing CSI-RSs by using first precoding on M subbands in the scheduled uplink bandwidth, and M is an integer greater than 0; the terminal device determines M equivalent channel matrices based on the M second signals and the CSI-RSs, where the equivalent channel matrix is equal to a product of a downlink channel matrix and the first precoding; and the terminal device uses an average value of the M equivalent channel matrices as the uplink precoding of the terminal device.

In this implementation, the terminal device may determine, based on the received M second signals and the CSI-RSs, the M equivalent channel matrices for sending the second signals, and use the M equivalent channel matrices as the uplink precoding of the terminal device. This can improve accuracy of the uplink precoding of the terminal device.

In a possible implementation, the M subbands in the scheduled uplink bandwidth are agreed upon by the RAN device and the terminal device, or the M subbands in the scheduled uplink bandwidth are indicated by the first downlink control information, and the M subbands are subbands with a largest signal-to-noise ratio in a plurality of subbands in the scheduled uplink bandwidth.

In this implementation, both the RAN device and the terminal device know the selected M subbands. Alternatively, the M subbands whose signal-to-noise ratios rank high are selected by ranking signal-to-noise ratios of the subbands in the scheduled uplink bandwidth in descending order. Generally, a larger signal-to-noise ratio indicates lower noise, that is, indicates less impact of channel noise on transmission. This can ensure higher accuracy of uplink precoding used by the terminal device.

It should be noted that steps performed by the terminal device in the third aspect correspond to steps performed by the RAN device in the first aspect. In other words, the third aspect is a peer aspect of the first aspect.

According to a fourth aspect, an embodiment of this application provides a precoding indication manner determining method. The method may be performed by a processor of a terminal device, or may be performed by a chip corresponding to the processor. This is not limited herein. Specifically, the following steps may be performed. The terminal device receives first information from a RAN device, where the first information carries a scheduled uplink bandwidth and a quantity of uplink data flows of the terminal device; the terminal device determines, based on the first information, an uplink precoding indication manner used by the terminal device; and the terminal device determines uplink precoding in the uplink precoding indication manner.

In this step, after receiving the first information from the RAN device, the terminal device may autonomously determine, based on the scheduled uplink bandwidth and the quantity of uplink data flows of the terminal device that are carried in the first information, the uplink precoding indication manner used by the terminal device, and further determine the corresponding uplink precoding in the uplink precoding indication manner. This can ensure accuracy of the to-be-used uplink precoding indication manner determined by the terminal device, can avoid additional overheads caused when the RAN device indicates the corresponding uplink precoding indication manner to the terminal device by using additional information, and can avoid an inaccurate indication result caused by an error in a process in which the RAN device indicates the corresponding uplink precoding indication manner to the terminal device.

In a possible implementation, the first information includes first downlink control information DCI, and the first DCI carries the scheduled uplink bandwidth and the quantity of uplink data flows of the terminal device.

In this implementation, the RAN device may carry the scheduled uplink bandwidth and the quantity of uplink data flows of the terminal device by using the DCI in the first information, to ensure security of transmitting the scheduled uplink bandwidth and the quantity of uplink data flows of the terminal device.

In a possible implementation, that the terminal device determines, based on the first information, an uplink precoding indication manner used by the terminal device includes: The terminal device determines, based on the scheduled uplink bandwidth and the quantity of uplink data flows of the terminal device and according to a first rule, the uplink precoding indication manner used by the terminal device. The first rule includes: when the scheduled uplink bandwidth of the terminal device is less than a first threshold and the quantity of uplink data flows of the terminal device is less than a second threshold, determining that the terminal device uses a wideband codebook indication manner; or when the scheduled uplink bandwidth of the terminal device is greater than a first threshold and the quantity of uplink data flows of the terminal device is less than a second threshold, determining that the terminal device uses a subband codebook indication manner; or when the scheduled uplink bandwidth of the terminal device is less than a first threshold and the quantity of uplink data flows of the terminal device is greater than a second threshold, determining that the terminal device uses a wideband precise indication manner; or when the scheduled uplink bandwidth of the terminal device is greater than a first threshold and the quantity of uplink data flows of the terminal device is greater than a second threshold, determining that the terminal device uses a subband precise indication manner; or when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

In this implementation, after learning of the scheduled uplink bandwidth and the quantity of uplink data flows of the terminal device, the terminal device may flexibly determine, based on the scheduled uplink bandwidth and the quantity of uplink data flows of the terminal device and according to the first rule, the uplink precoding indication manner used by the terminal device. For an effect corresponding to each uplink precoding indication manner, refer to the effect described in a corresponding part in the first aspect. Details are not described herein again.

It should be noted that the first threshold indicates a threshold of the scheduled uplink bandwidth, and the second threshold indicates a threshold of the quantity of uplink data flows. The threshold of the scheduled uplink bandwidth and the threshold of the quantity of uplink data flows may be specified in a standard protocol, or the threshold of the scheduled uplink bandwidth may be agreed upon by the RAN device and the terminal device through negotiation, or the threshold of the scheduled uplink bandwidth and the threshold of the quantity of uplink data flows may be set based on an actual requirement. This is not specifically limited in this application.

In a possible implementation, the first DCI carries first indication information indicating an index of a codebook used by the terminal device.

In a possible implementation, the first information includes configuration information of an aperiodic channel state information-reference signal CSI-RS. The CSI-RS is a downlink reference signal, and the CSI-RS is used by the terminal device to determine the to-be-used uplink precoding.

In a possible implementation, the first DCI is used to notify the RAN device whether to send the CSI-RS.

In a possible implementation, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In a possible implementation, when the terminal device determines that the to-be-used precoding indication manner is the wideband precise indication manner, the method further includes: The terminal device receives M second signals sent by the RAN device, where the M second signals are signals obtained by performing downlink channel processing on M first signals, the M first signals are obtained by the RAN device by processing CSI-RSs by using first precoding on M subbands in the scheduled uplink bandwidth, and M is an integer greater than 0; the terminal device determines M equivalent channel matrices based on the M second signals and the CSI-RSs, where the equivalent channel matrix is equal to a product of a downlink channel matrix and the first precoding; and the terminal device uses an average value of the M equivalent channel matrices as the uplink precoding of the terminal device.

In a possible implementation, the M subbands in the scheduled uplink bandwidth are agreed upon by the RAN device and the terminal device, or the M subbands are subbands with a largest signal-to-noise ratio in a plurality of subbands in the scheduled uplink bandwidth.

For effects of the possible implementations in the fourth aspect, refer to the effects of the possible implementations in the third aspect. Details are not described herein again.

It should be noted that steps performed by the terminal device in the fourth aspect correspond to steps performed by the RAN device in the second aspect. In other words, the fourth aspect is a peer aspect of the second aspect.

According to a fifth aspect, an embodiment of this application provides a RAN device. The RAN device includes a transceiver module and a processing module.

The transceiver module is configured to obtain information about an uplink channel of a terminal device. The processing module is configured to determine a scheduled uplink bandwidth and a quantity of uplink data flows of the terminal device based on the information about the uplink channel of the terminal device. The processing module is further configured to determine an uplink precoding indication manner of the terminal device based on the scheduled uplink bandwidth and the quantity of uplink data flows of the terminal device. The transceiver module is further configured to send first information to the terminal device, where the first information indicates the uplink precoding indication manner.

In a possible design, when determining the uplink precoding indication manner of the terminal device based on the scheduled uplink bandwidth and the quantity of uplink data flows of the terminal device, the processing module is specifically configured to determine the uplink precoding indication manner used by the terminal device based on the scheduled uplink bandwidth and the quantity of uplink data flows of the terminal device and according to a first rule. The first rule includes: when the scheduled uplink bandwidth of the terminal device is less than a first threshold and the quantity of uplink data flows of the terminal device is less than a second threshold, determining that the terminal device uses a wideband codebook indication manner; or when the scheduled uplink bandwidth of the terminal device is greater than a first threshold and the quantity of uplink data flows of the terminal device is less than a second threshold, determining that the terminal device uses a subband codebook indication manner; or when the scheduled uplink bandwidth of the terminal device is less than a first threshold and the quantity of uplink data flows of the terminal device is greater than a second threshold, determining that the terminal device uses a wideband precise indication manner; or when the scheduled uplink bandwidth of the terminal device is greater than a first threshold and the quantity of uplink data flows of the terminal device is greater than a second threshold, determining that the terminal device uses a subband precise indication manner; or when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

In a possible implementation, the processing module is further configured to determine information about uplink precoding of the terminal device based on the information about the uplink channel of the terminal device.

In a possible design, when obtaining the information about the uplink channel of the terminal device, the transceiver module is specifically configured to: receive a channel sounding reference signal SRS from the terminal device; and determine the information about uplink channel of the terminal device based on the SRS sent by the terminal device.

In a possible design, when the RAN device determines that the precoding indication manner used by the terminal device is the wideband codebook indication manner or the subband codebook indication manner, the first information includes first downlink control information DCI, and the first DCI carries first indication information indicating an index of a codebook used by the terminal device.

In a possible design, when the RAN device determines that the precoding indication manner used by the terminal device is the wideband precise indication manner or the subband precise indication manner, the first information includes configuration information of an aperiodic channel state information-reference signal CSI-RS, and the CSI-RS is used by the terminal device to determine to-be-used uplink precoding.

In a possible design, the first DCI is used to notify the RAN device whether to send the CSI-RS.

In a possible design, the first DCI carries 2-bit information, and the 2-bit information indicates the uplink precoding indication manner used by the terminal device.

In a possible design, the first DCI further carries the scheduled uplink bandwidth and the quantity of uplink data flows that are used by the terminal device.

In a possible design, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In a possible design, when determining that the precoding indication manner used by the terminal device is the wideband precise indication manner, the processing module is further configured to: determine M subbands from a plurality of subbands in the scheduled uplink bandwidth of the terminal device, where M is an integer greater than 0; obtain first precoding on each of the M subbands; process a to-be-sent CSI-RS on each subband by using the first precoding on each subband, to obtain a first signal; and send the first signal to the terminal device on the M subbands by using the transceiver module.

In a possible design, the M subbands in the scheduled uplink bandwidth are agreed upon by the RAN device and the terminal device, or the M subbands are subbands with a largest signal-to-noise ratio in the plurality of subbands in the scheduled uplink bandwidth.

According to a sixth aspect, an embodiment of this application provides a RAN device. The RAN device includes a transceiver module and a processing module.

The transceiver module is configured to obtain information about an uplink channel of a terminal device. The processing module is configured to determine a scheduled uplink bandwidth and a quantity of uplink data flows of the terminal device based on the information about the uplink channel of the terminal device. The transceiver module is further configured to send first information to the terminal device, where the first information carries the scheduled uplink bandwidth and the quantity of uplink data flows of the terminal device.

In a possible design, the first information includes first downlink control information DCI, and the first DCI carries the scheduled uplink bandwidth and the quantity of uplink data flows of the terminal device.

In a possible design, the processing module is further configured to determine an uplink precoding indication manner used by the terminal device based on the scheduled uplink bandwidth and the quantity of uplink data flows of the terminal device.

In a possible design, when it is determined that the precoding indication manner used by the terminal device is a wideband codebook indication manner or a subband codebook indication manner, the first DCI carries first indication information indicating an index of a codebook used by the terminal device.

In a possible design, when it is determined that the precoding indication manner used by the terminal device is a wideband precise indication manner or a subband precise indication manner, the first information includes configuration information of an aperiodic channel state information-reference signal CSI-RS. The CSI-RS is a downlink reference signal, and the CSI-RS is used by the terminal device to determine to-be-used uplink precoding.

In a possible design, the first DCI is used to notify the RAN device whether to send the CSI-RS.

In a possible design, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In a possible design, when determining that the precoding indication manner used by the terminal device is the wideband precise indication manner, the processing module is further configured to: determine M subbands from a plurality of subbands in the scheduled uplink bandwidth of the terminal device, where M is an integer greater than 0; obtain first precoding on each of the M subbands; and process a to-be-sent CSI-RS on each subband by using the first precoding on each subband, to obtain a first signal. The transceiver module is further configured to send the first signal to the terminal device on the M subbands.

In a possible design, the M subbands in the scheduled uplink bandwidth are agreed upon by the RAN device and the terminal device, or the M subbands are subbands with a largest signal-to-noise ratio in the plurality of subbands in the scheduled uplink bandwidth.

According to a seventh aspect, an embodiment of this application provides a terminal device. The terminal device includes a transceiver module and a processing module.

The transceiver module is configured to receive first information from a RAN device, where the first information indicates a corresponding precoding indication manner. The processing module is configured to obtain, based on the first information, the uplink precoding indication manner used by the terminal device. The processing module is further configured to determine uplink precoding in the uplink precoding indication manner.

In a possible design, the transceiver module is further configured to: before receiving the first information from the RAN device, send a channel sounding reference signal SRS to the RAN device, where the SRS information is used to determine information about an uplink channel of the terminal device.

In a possible design, the first information includes first downlink control information DCI, where the first DCI includes a preset field, and the preset field indicates a quantity of uplink data flows of the terminal device; or the first DCI includes a transmitted precoding matrix indicator TPMI field, and the TPMI field indicates a quantity of uplink data flows of the terminal device.

In a possible design, the first DCI carries 2-bit information, and the 2-bit information indicates the uplink precoding indication manner of the terminal device.

In a possible design, the first DCI further carries first indication information indicating an index of a codebook used by the terminal device.

In a possible design, the first information further includes configuration information of an aperiodic channel state information-reference signal CSI-RS, and the CSI-RS is used by the terminal device to determine the to-be-used uplink precoding.

In a possible design, the first DCI is further used to notify the RAN device whether to send the CSI-RS.

In a possible design, when determining that the to-be-used precoding indication manner is a wideband precise indication manner, the processing module is further configured to: receive, by using the transceiver module, M second signals sent by the RAN device, where the M second signals are signals obtained by performing downlink channel processing on M first signals, the M first signals are obtained by the RAN device by processing CSI-RSs by using first precoding on M subbands in a scheduled uplink bandwidth, and M is an integer greater than 0; determine M equivalent channel matrices based on the M second signals and the CSI-RSs, where the equivalent channel matrix is equal to a product of a downlink channel matrix and the first precoding; and use an average value of the M equivalent channel matrices as the uplink precoding of the terminal device.

In a possible design, the M subbands in the scheduled uplink bandwidth are agreed upon by the RAN device and the terminal device, or the M subbands in the scheduled uplink bandwidth are indicated by the first downlink control information, and the M subbands are subbands with a largest signal-to-noise ratio in a plurality of subbands in the scheduled uplink bandwidth.

It should be noted that the terminal device in the seventh aspect is a peer apparatus of the RAN device in the fifth aspect.

According to an eighth aspect, an embodiment of this application provides a terminal device. The terminal device includes a transceiver module and a processing module.

The transceiver module is configured to receive first information from a RAN device, where the first information carries a scheduled uplink bandwidth and a quantity of uplink data flows of the terminal device. The processing module is configured to determine, based on the first information, an uplink precoding indication manner used by the terminal device. The processing module is further configured to determine uplink precoding in the uplink precoding indication manner.

In a possible design, the first information includes first downlink control information DCI, and the first DCI carries the scheduled uplink bandwidth and the quantity of uplink data flows of the terminal device.

In a possible implementation, when determining, based on the first information, the uplink precoding indication manner used by the terminal device, the processing module is specifically configured to determine the to-be-used uplink precoding indication manner based on the scheduled uplink bandwidth and the quantity of uplink data flows and according to a first rule. The first rule includes: when the scheduled uplink bandwidth of the terminal device is less than a first threshold and the quantity of uplink data flows of the terminal device is less than a second threshold, determining that the terminal device uses a wideband codebook indication manner; or when the scheduled uplink bandwidth of the terminal device is greater than a first threshold and the quantity of uplink data flows of the terminal device is less than a second threshold, determining that the terminal device uses a subband codebook indication manner; or when the scheduled uplink bandwidth of the terminal device is less than a first threshold and the quantity of uplink data flows of the terminal device is greater than a second threshold, determining that the terminal device uses a wideband precise indication manner; or when the scheduled uplink bandwidth of the terminal device is greater than a first threshold and the quantity of uplink data flows of the terminal device is greater than a second threshold, determining that the terminal device uses a subband precise indication manner; or when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

In a possible design, the first DCI carries first indication information indicating an index of a codebook used by the terminal device.

In a possible design, the first information includes configuration information of an aperiodic channel state information-reference signal CSI-RS. The CSI-RS is a downlink reference signal, and the CSI-RS is used by the terminal device to determine the to-be-used uplink precoding.

In a possible design, the first DCI is used to notify the RAN device whether to send the CSI-RS.

In a possible implementation, the first DCI includes a preset field, and the preset field indicates the quantity of uplink data flows of the terminal device; or the first DCI includes a transmitted precoding matrix indicator TPMI field, and the TPMI field indicates the quantity of uplink data flows of the terminal device.

In a possible design, when determining that the to-be-used precoding indication manner is the wideband precise indication manner, the transceiver module is further configured to receive M second signals sent by the RAN device, where the M second signals are signals obtained by performing downlink channel processing on M first signals, the M first signals are obtained by the RAN device by processing CSI-RSs by using first precoding on M subbands in the scheduled uplink bandwidth, and M is an integer greater than 0. The processing module is further configured to: determine M equivalent channel matrices based on the M second signals and the CSI-RSs, where the equivalent channel matrix is equal to a product of a downlink channel matrix and the first precoding; and use an average value of the M equivalent channel matrices as the uplink precoding of the terminal device.

In a possible design, the M subbands in the scheduled uplink bandwidth are agreed upon by the RAN device and the terminal device, or the M subbands are subbands with a largest signal-to-noise ratio in a plurality of subbands in the scheduled uplink bandwidth.

It should be noted that the terminal device in the eighth aspect is a peer apparatus of the RAN device in the sixth aspect.

According to a ninth aspect, an embodiment of this application provides a communication apparatus. The communication apparatus includes a processor coupled to a memory. The memory stores a computer program or computer instructions. The processor is configured to invoke and run the computer program or the computer instructions stored in the memory, so that the processor implements any one of the first aspect or the possible implementations of the first aspect, or the processor implements any one of the second aspect or the possible implementations of the second aspect, or the processor implements any one of the third aspect or the possible implementations of the third aspect, or the processor implements any one of the fourth aspect or the possible implementations of the fourth aspect.

Optionally, the communication apparatus further includes the foregoing memory. Optionally, the memory may be integrated with the processor.

Optionally, the communication apparatus further includes a transceiver. The processor is configured to control the transceiver to receive and send a signal, information, data, and/or the like.

According to a tenth aspect, an embodiment of this application provides a communication apparatus. The communication apparatus includes a processor. The processor is configured to invoke a computer program or computer instructions that is/are stored in a memory, so that the processor implements any one of the first aspect or the possible implementations of the first aspect, or the processor is configured to perform any one of the second aspect or the possible implementations of the second aspect, or the processor is configured to perform any one of the third aspect or the possible implementations of the third aspect, or the processor is configured to perform any one of the fourth aspect or the possible implementations of the fourth aspect.

The communication apparatus further includes a transceiver. The processor is configured to control the transceiver to receive and send a signal, information, data, and/or the like.

According to an eleventh aspect, an embodiment of this application provides a communication apparatus. The communication apparatus includes a processor. The processor is configured to perform any one of the first aspect or the possible implementations of the first aspect, or the processor is configured to perform any one of the second aspect or the possible implementations of the second aspect, or the processor is configured to perform any one of the third aspect or the possible implementations of the third aspect, or the processor is configured to perform any one of the fourth aspect or the possible implementations of the fourth aspect.

According to a twelfth aspect, an embodiment of this application further provides a computer program product including instructions. When the computer program product runs on a computer, the computer performs any one of the first aspect or the possible implementations of the first aspect, or the computer performs any one of the second aspect or the possible implementations of the second aspect, or the computer performs any one of the third aspect or the possible implementations of the third aspect, or the computer performs any one of the fourth aspect or the possible implementations of the fourth aspect.

According to a thirteenth aspect, an embodiment of this application further provides a computer-readable storage medium, including computer instructions. When the instructions are run on a computer, the computer performs any one of the first aspect or the possible implementations of the first aspect, or the computer performs any one of the second aspect or the possible implementations of the second aspect, or the computer performs any one of the third aspect or the possible implementations of the third aspect, or the computer performs any one of the fourth aspect or the possible implementations of the fourth aspect.

According to a fourteenth aspect, an embodiment of this application further provides a chip apparatus, including a processor, configured to invoke a computer program or computer instructions that is/are in a memory, so that the processor performs any one of the first aspect or the possible implementations of the first aspect, or the processor performs any one of the second aspect or the possible implementations of the second aspect, or the processor performs any one of the third aspect or the possible implementations of the third aspect, or the processor performs any one of the fourth aspect or the possible implementations of the fourth aspect.

Optionally, the processor is coupled to the memory through an interface.

For technical effects that can be achieved in any one of the fifth aspect or the possible implementations of the fifth aspect, refer to the descriptions of technical effects that can be achieved in any one of the first aspect or the possible implementations of the first aspect. For technical effects that can be achieved in any one of the sixth aspect or the possible implementations of the sixth aspect, refer to the descriptions of technical effects that can be achieved in any one of the second aspect or the possible implementations of the second aspect. For technical effects that can be achieved in any one of the seventh aspect or the possible implementations of the fourth aspect, refer to the descriptions of technical effects that can be achieved in any one of the third aspect or the possible implementations of the third aspect. For technical effects that can be achieved in any one of the eighth aspect or the possible implementations of the eighth aspect, refer to the descriptions of technical effects that can be achieved in any one of the fourth aspect or the possible implementations of the fourth aspect. Details are not described herein again.

## BRIEF DESCRIPTION OF DRAWINGS

FIG. 1 shows a communication system to which a precoding indication manner determining method is applicable according to an embodiment of this application;

FIG. 2 is a diagram of division of an existing uplink precoding indication manner;

FIG. 3 is a diagram of devices and network elements that are related to an example of determining an uplink precoding indication manner according to an embodiment of this application;

FIG. 4 is a schematic flowchart of an example of a precoding indication manner determining method according to an embodiment of this application;

FIG. 5 is a diagram of division of an uplink precoding indication method according to an embodiment of this application;

FIG. 6 is a diagram of selecting M subbands from an uplink bandwidth according to an embodiment of this application;

FIG. 7 is a diagram of steps of determining uplink precoding in a wideband precise indication manner according to an embodiment of this application;

FIG. 8 is a diagram of a structure of a communication apparatus according to an embodiment of this application;

FIG. 9 is a diagram of a structure of another communication apparatus according to an embodiment of this application; and

FIG. 10 is a diagram of a simplified structure of a chip according to an embodiment of this application.

## DESCRIPTION OF EMBODIMENTS

Embodiments of this application provide a precoding indication manner determining method and an apparatus. The method and the apparatus are based on a same technical concept. Because problem-resolving principles of the method and the apparatus are similar, mutual reference may be made to implementations of the apparatus and the method, and no repeated description is provided.

The following describes technical solutions of this application with reference to accompanying drawings.

The technical solutions in this application may be applied to various communication systems, such as a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system.

The precoding indication manner determining method provided in embodiments of this application is mainly applied to a 5G network, and may be applied to another scenario like a wireless communication network in which an uplink precoding indication may be used. A communication process may occur between a radio access network (radio access network, RAN) device and a terminal device.

The following describes the RAN device and the terminal device in this application.

(1) A radio access network (RAN) device includes, for example, a base station (for example, an access point), and may be a device that is in an access network and that communicates with a wireless terminal over an air interface through one or more cells. The (radio) access network device may be configured to: perform mutual conversion between a received over-the-air frame and an internet protocol (IP) packet, and serve as a router between remote UE and a remaining portion of the access network, where the remaining portion of the access network may include an IP network. The (radio) access network device may further coordinate attribute management of the air interface.

For example, the radio access network device may include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP).

The radio access network device may alternatively include an evolved NodeB (NodeB, eNB, or e-NodeB, evolved NodeB) in a long term evolution (long term evolution, LTE) system, an LTE-advanced (LTE-Advanced, LTE-A) system, or a 4th generation mobile communication technology (4th generation mobile communication technology, 4G) system.

Alternatively, the (radio) access network device may include a next generation NodeB (next generation nodeB, gNB), a transmitting and receiving point (transmitting and receiving point, TRP), or a transmitting point (transmitting point, TP) in a 5G system or a new radio (new radio, NR) system.

Alternatively, the radio access network device may include a central unit (central unit, CU) and/or a distributed unit (distributed unit, DU) in a cloud radio access network (cloud radio access network, Cloud RAN) system. This is not limited in embodiments of this application. In embodiments of this application, technical terms "(radio) access network device" and "access network device" may be used interchangeably.

(2) A terminal device may be a wireless terminal device that can receive scheduling and indication information of the RAN device. The terminal device may be a device that provides a user with voice and/or data connectivity, a handheld device having a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing a user with voice/data connectivity), for example, a handheld device or a vehicle-mounted device having a wireless connection function. Currently, for example, the terminal device is a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control, a wireless terminal in vehicle-to-everything, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the vehicle-to-everything may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a sound box, a set-top box, or the like.

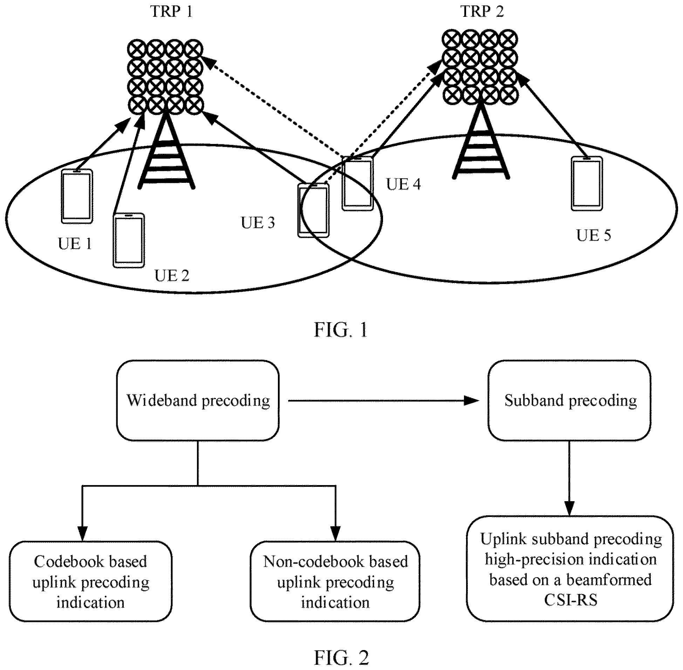

For ease of understanding the technical solutions in embodiments of this application, with reference to FIG. 1, the following shows a possible communication system to which a beam usage method is applicable according to an embodiment of this application.

FIG. 1 is a diagram of a communication system according to an embodiment of this application. As shown in FIG. 1, the communication system includes transmitting and receiving points, namely, a TRP 1 and a TRP 2, and a terminal device UE 1 to a terminal device UE 5. The UE 1 to the UE 5 may send uplink data, and the uplink data sent by the UE 1 to the UE 5 may be received by either of the TRPs, or may be jointly received by the two TRPs. For example, as shown in FIG. 1, the UE 1 and the UE 2 communicate with the TRP 1, and uplink data sent by the UE 1 and the UE 2 is received by the TRP 1. In addition, the TRP 1 may also send downlink data and/or information to the UE 1 and the UE 2. The UE 5 communicates with the TRP 2, uplink data sent by the UE 5 is received by the TRP 2, and the TRP 2 may send downlink data and/or information to the UE 5. Both the UE 3 and the UE 4 simultaneously communicate with the TRP 1 and the TRP 2, and uplink data sent by the UE 3 and the UE 4 is jointly received by the TRP 1 and the TRP 2 simultaneously. The TRP 1 and the TRP 2 may also send downlink data and/or information to the UE 3 and the UE 4. In this embodiment of this application, a quantity of uplink transmission flows and uplink precoding that are of each UE are calculated by a TRP (namely, a base station) side, and are indicated to each UE by using downlink information.

In an uplink MU-MIMO system, uplink precoding plays an important role in a system capacity and spectral efficiency. Currently, there are mainly three indication manners for uplink precoding: a codebook based uplink precoding indication, a non-codebook based uplink precoding indication, and an uplink subband precoding high-precision indication based on a beamformed CSI-RS. As shown in FIG. 2, although the three uplink precoding indication manners achieve corresponding gain effects, signaling overheads of different degrees are generated. However, in the conventional technology, different uplink precoding indication manners are not flexibly selected for different application scenarios, and therefore an optimal tradeoff cannot be achieved between low indication overheads and high indication precision. The low indication overheads mean low overheads corresponding to an uplink precoding indication manner, and the high indication precision means high accuracy of an uplink precoding indication manner. For example, in a scenario in which there is no reciprocity between an uplink and a downlink, for uplink transmission of the codebook based uplink precoding indication, a same wideband quantization codebook is used for different quantities of data flows and different bandwidths that are transmitted by a terminal device. Although the codebook based uplink precoding indication has low overheads, when both a scheduled bandwidth and a quantity of data flows is large, the codebook based uplink precoding indication has low precision. For uplink transmission of the non-codebook based uplink precoding indication, a wideband high-precision precoding matrix obtained by the terminal device through calculation is used for different bandwidths and different quantities of data flows transmitted by the terminal device. In the uplink subband precoding high-precision indication based on the beamformed CSI-RS, an uplink precoding matrix may be accurately indicated to the terminal device by using the CSI-RS and based on a quantity of data flows for uplink transmission of the terminal device and a corresponding codebook matrix. Although both the two indication manners have higher precision and higher implemented gains than the codebook based uplink precoding indication manner, signaling overheads are also higher.

Therefore, this application provides a precoding indication manner determining method. The method includes: A RAN device obtains information about an uplink channel of a terminal device; then, the RAN device determines a scheduled uplink bandwidth and a quantity of uplink data flows of the terminal device based on the information about the uplink channel of the terminal device, and determines information about the uplink precoding; further, the RAN device determines an uplink precoding indication manner of the terminal device based on the scheduled uplink bandwidth and the quantity of uplink data flows of the terminal device; and finally, the RAN device sends first information to the terminal device, where the first information indicates the uplink precoding indication manner. According to the method, the uplink precoding indication manner can be flexibly and accurately determined for the terminal device. This can ensure accuracy of uplink precoding used by the terminal device while reducing unnecessary indication overheads.

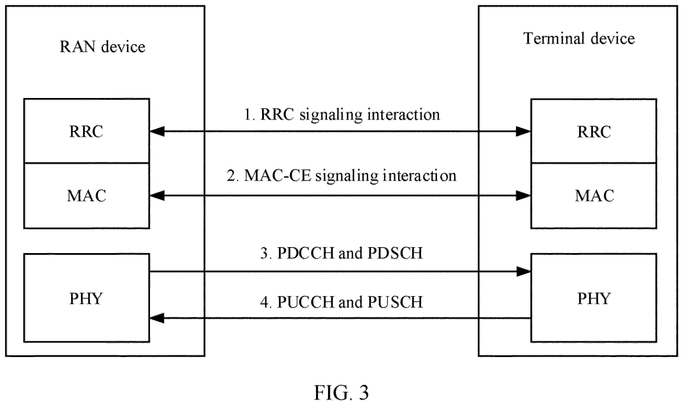

The following describes devices and network elements in embodiments of this application. Devices in this application mainly include a RAN device, for example, a base station gNB, and a terminal device. As shown in FIG. 3, network elements in embodiments of this application include:

a radio resource control (radio resource control, RRC) signaling interaction module, which is a module configured by the RAN device and the terminal device to send and receive RRC signaling;
a medium access control (medium access control, MAC) layer signaling interaction module, which is a module configured by the RAN device and the terminal device to send and receive medium access control (medium access control, MAC)-control element (control element, CE) signaling; and
a physical (physical, PHY) layer signaling and data exchange module, which is a module configured by the RAN device and the terminal device to send and receive uplink/downlink control signaling and uplink/downlink data.

To facilitate understanding of the technical solutions in this application, the following describes some technical terms in this application.

(1) Precoding

In a MIMO system, a precoding technology may be used to preprocess to-be-sent data in a base station, so that data sent by the base station may be sent to a user in a cell more directionally.

Precoding has the following advantages. First, signal processing is performed in the base station, so that the user can directly receive data required by the user, and a terminal device does not need to perform signal processing. Second, Precoding may enable a signal sent by the base station to be more directional, instead of simply radiating to the surroundings. This increases power of a signal received by the user, avoids a waste of energy, and improves energy efficiency of a communication system.

Generally, precoding may be classified into linear precoding and non-linear precoding. Typical linear precoding includes maximum ratio transmission MRT, zero-forcing precoding ZF, a minimum mean square error MMSE, and the like.

Precoding may be classified into codebook based precoding and non-codebook based precoding based on a feature of a precoding matrix set used for precoding. The codebook based precoding is a set including a limited quantity of precoding matrices. Therefore, in the codebook based precoding, only an available precoding matrix can be selected from a codebook. In the non-codebook based precoding, a quantity of available precoding matrices is not limited. Therefore, a precoding matrix may be any matrix that meets a design rule and an application condition limitation, and is not limited to a specific codebook.

In addition, in a codebook based precoding method, channel reciprocity is not required. Therefore, receive/transmit symmetry of a radio frequency link does not need to be calibrated, and there is no requirement on an uplink transmission capability of the terminal device. In addition, a codebook based channel quality indicator (channel quality indicator, CQI) calculation process can reflect a processing algorithm of the terminal, and is accurate. However, there is a quantization precision loss problem in the codebook based precoding method. Therefore, a precoding matrix cannot accurately match a channel. In addition, with an increase in a size of a codebook, performance of codebook based precoding is improved, but overheads of precoding matrix indicator (precoding matrix indicator, PMI) reporting and downlink control signaling are also increased.

In a non-codebook based precoding method, a channel reciprocity characteristic is required. A network device obtains information about an uplink channel based on a uplink reference signal, obtains information about a downlink channel based on the channel reciprocity, and performs matrix decomposition by using the obtained information about the channels, to generate a required precoding matrix. The non-codebook based precoding method has a prominent advantage in a time division duplex (time division duplexing, TDD) system. In this way, uplink feedback overheads are reduced, to help the network device flexibly select a precoding matrix.

(2) Wideband codebook indication manner

The wideband codebook indication manner in embodiments of this application may be an uplink wideband codebook indication manner, and is a codebook based uplink precoding indication manner. Specifically, in the wideband codebook indication manner, a RAN device first receives an uplink reference signal (for example, an SRS) from a terminal device, and then obtains information about an uplink channel of the terminal device through measurement based on the uplink reference signal. Then, the RAN device determines a quantity of data flows and a scheduled uplink bandwidth of the terminal device based on the information about the uplink channel of the terminal device. Further, the RAN device determines, from a plurality of to-be-selected wideband codebooks based on the quantity of data flows and the scheduled uplink bandwidth of the terminal device, a codebook used on a wideband for uplink transmission of the terminal device, and finally sends an index of the codebook to the terminal device. The terminal device may determine, from the plurality of to-be-selected wideband codebooks based on the index of the codebook, a wideband codebook corresponding to the index, and use, as a codebook used on the wideband for uplink transmission, the wideband codebook corresponding to the index. It should be understood that the plurality of to-be-selected wideband codebooks are known codebooks agreed upon in advance by the RAN device and the terminal device. The known codebooks may be codebooks used for historical communication between the RAN device and the terminal device, or the like. This is not specifically limited in this application.

In this way, when both the uplink bandwidth and the quantity of data flows that are used by the terminal device are small, the wideband codebook indication manner is used. This can ensure high accuracy of uplink precoding used by the terminal device, and can reduce system overheads.

(3) Subband codebook indication manner

The subband codebook indication manner in embodiments of this application may be an uplink subband codebook indication manner, and is a codebook based uplink precoding indication manner. Specifically, in the subband codebook indication manner, a RAN device first receives an uplink reference signal (for example, an SRS) from a terminal device, and then obtains information about an uplink channel of the terminal device through measurement based on the uplink reference signal. Then, the RAN device determines a quantity of data flows and a scheduled uplink bandwidth of the terminal device based on the information about the uplink channel of the terminal device. Further, the RAN device determines, from a plurality of to-be-selected subband codebooks based on the quantity of data flows and the scheduled uplink bandwidth of the terminal device, codebooks used on a plurality of subbands for uplink transmission of the terminal device, where the plurality of subbands are obtained by dividing a wideband for uplink transmission of the terminal device. Finally, the RAN device sends indexes of the codebooks on the subbands to the terminal device. In this case, the terminal device may determine, from the plurality of to-be-selected subband codebooks based on the indexes of the codebooks on the subbands, subband codebooks corresponding to the indexes, and use, as codebooks that are to be used and that correspond to the subbands for uplink transmission, the subband codebooks corresponding to the indexes. It should be understood that the plurality of to-be-selected subband codebooks are known subband codebooks agreed upon in advance by the RAN device and the terminal device. The known subband codebooks may be subband codebooks used for historical communication between the RAN device and the terminal device, or the like. This is not specifically limited in this application.

In this way, when the uplink bandwidth used by the terminal device is large and the quantity of uplink data flows used by the terminal device is small, the subband codebook indication manner is used. This can improve precision of uplink precoding used by the terminal device, and reduce indication overheads.

### (4) Wideband precise indication manner

The wideband precise indication manner in embodiments of this application may be an uplink wideband precoding high-precision indication based on a beamformed CSI-RS, or may be a non-codebook based uplink precoding indication manner. Specifically, in the wideband precise indication manner, a terminal device sends, to a RAN device by using a wideband, an uplink reference signal (for example, an SRS) of information for measuring an uplink channel. The RAN device may measure the uplink channel based on the uplink reference signal, then obtain information about a downlink channel based on reciprocity between an uplink and a downlink, and obtain downlink precoding through calculation based on the information about the downlink channel. Further, the RAN device processes a downlink reference signal (for example, a CSI-RS or a demodulation reference signal (demodulation reference signal, DMRS)) by using the downlink precoding, and sends a processed downlink reference signal to the terminal device. The terminal device may determine, based on the processed downlink reference signal, precoding used on a wideband for uplink transmission.

In this way, when an uplink bandwidth used by the terminal device is small and a quantity of uplink data flows is large, the wideband precise indication manner is used. This can greatly improve precision of uplink precoding used by the terminal device, and reduce indication overheads.

### (5) Subband precise indication manner

The subband precise indication manner in embodiments of this application may be an uplink subband precise indication manner, and is an uplink subband precoding high-precision indication based on a beamformed CSI-RS, or may be a non-codebook based uplink precoding indication manner. Specifically, in the subband precise indication manner, a terminal device sends, to a RAN device by using a plurality of subbands, an uplink reference signal (for example, an SRS) of information for measuring an uplink channel. The plurality of subbands are obtained by dividing a bandwidth for uplink transmission of the terminal device. The RAN device may measure the uplink channel based on the uplink reference signal, and then obtain information about a downlink channel based on reciprocity between an uplink and a downlink. Then, the RAN device calculates downlink precoding on a plurality of subbands, processes to-be-sent downlink reference signals (such as CSI-RSs or DMRSs) on corresponding subbands by using the downlink precoding on the plurality of subbands, to obtain processed downlink reference signals, and sends the processed downlink reference signals to the terminal device. The terminal device may obtain, through calculation based on the processed downlink reference signals sent on the plurality of subbands, precoding used on the plurality of subbands for uplink transmission, and finally use, as uplink precoding used for uplink transmission by the terminal device, an average value of the precoding used on the plurality of subbands.

In this way, when both an uplink bandwidth and a quantity of uplink data flows that are used by the terminal device are large, the subband precise indication manner is used. This can ensure that the terminal device uses uplink precoding with highest precision.

### (6) scheduled uplink bandwidth

To appropriately use spectrum resources, a spectrum range for each communication system is specified in the International Telecommunication Union (the international telecommunication union, ITU). The spectrum range is also referred to as a frequency band, and a spectrum width of the frequency band is referred to as a bandwidth. Generally, the bandwidth may be classified into an uplink bandwidth and a downlink bandwidth based on a transmission direction.

The scheduled bandwidth in embodiments of this application is an uplink bandwidth resource that can be used and that is scheduled by a RAN device for a terminal device when the terminal device communicates with the RAN device. The terminal device may send uplink data to the RAN device by using the scheduled uplink bandwidth resource.

(7) Data flow (data flow) and a quantity of flows

The data flow in embodiments of this application is a data sequence of a group of ordered bytes that have a start point and an end point, namely, an object that can be used for data transmission. A type of the data flow in this application may include service data, a signal flow, or the like. The type of the data flow is not specifically limited in this application. In addition, the data flow may be divided into an uplink data flow and a downlink data flow based on a direction. The uplink data flow is usually a data flow sent by a terminal device to a RAN device, and the downlink data flow is usually a data flow sent by the RAN device to the terminal device.

The quantity of flows (which is also referred to as a quantity of data flows or a quantity of spatial flows) is a quantity of transmission layers for spatial multiplexing, namely, a quantity of diagonal elements (singular values) of an intermediate diagonal matrix obtained by performing singular value decomposition (singular value decomposition, SVD) on a MIMO channel transfer matrix. Technically, the quantity of flows is referred to as a RANK/rank, that is, a RANK reported by the terminal to a network by using CSI. According to an NR protocol, it is specified that a single user supports a maximum of eight flows in a downlink and four flows in an uplink.

It should be noted that, in the method provided in embodiments of this application, an object on which precoding is performed is mainly the uplink data flow. Actually, the object on which precoding is performed may alternatively be an uplink signal. This is not specifically limited in this application.

(8) "A plurality of" in embodiments of this application means two or more. The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects. In addition, it should be understood that in descriptions of this application, terms such as "first" and "second" are merely used for distinguishing and description, but shall not be understood as indicating or implying relative importance, or shall not be understood as indicating or implying a sequence.

(9) The terms "including", "having", and any other variant thereof mentioned in the descriptions of embodiments of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application shall not be explained as being more preferred or having more advantages than another embodiment or design scheme. Exactly, use of the term "example", "for example", or the like is intended to present a related concept in a specific manner.

The technical solutions of this application are described below with reference to specific embodiments.

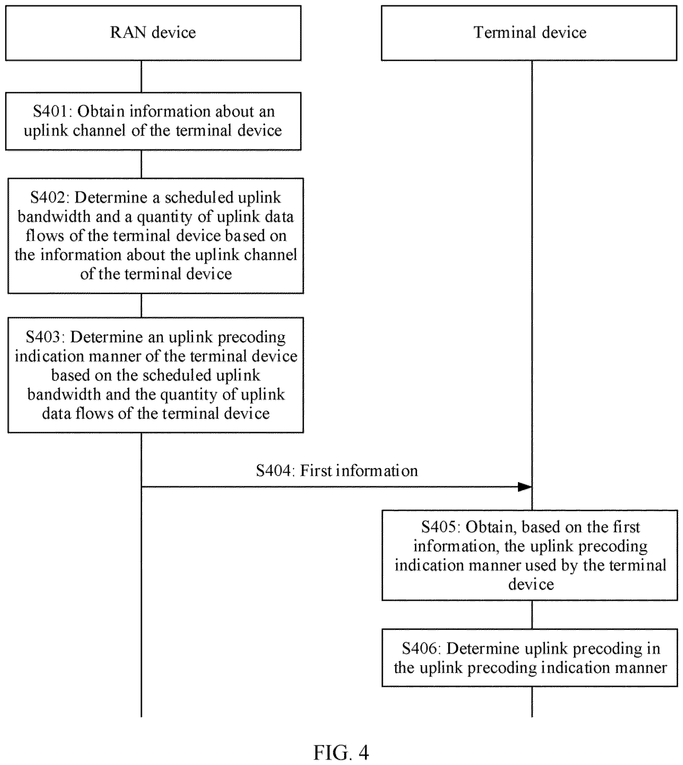

FIG. 4 is a diagram of an embodiment of a precoding indication manner determining method according to an embodiment of this application. This embodiment may be performed by a transceiver and/or a processor of a RAN device, or may be performed by a chip corresponding to the transceiver and/or the processor. Alternatively, this embodiment may be implemented by a controller or a control device connected to a RAN device, where the controller or the control device is configured to manage at least one RAN device including the RAN device. In addition, a form of a specific apparatus for performing this embodiment is not specifically limited in this application. In addition, in actual application, the RAN device may manage a plurality of terminal devices. Therefore, each of the plurality of terminal devices managed by the RAN device may determine an uplink precoding indication manner and corresponding uplink precoding with reference to actions performed by a terminal device in the foregoing steps S401 to S406.

As shown in FIG. 4, a specific procedure of the method is described below.

S401: The RAN device obtains information about an uplink channel of the terminal device.

That the RAN device obtains information about an uplink channel of the terminal device includes: The terminal device sends an SRS to the RAN device, where the SRS is used to determine the information about the uplink channel of the terminal device; and the RAN device receives the channel sounding reference signal SRS from the terminal device, and determines the information about the uplink channel of the terminal device based on the SRS sent by the terminal device.

It should be noted that, in this embodiment of this application, only one of the plurality of terminal devices managed by the RAN device is used as an example for description. Actually, the RAN device may determine information about an uplink channel of each terminal device with reference to the foregoing manner.

S402: The RAN device determines a scheduled uplink bandwidth and a quantity of uplink data flows of the terminal device based on the information about the uplink channel of the terminal device.

Optionally, the RAN device further determines uplink precoding of the terminal device.

Step S402 may be specifically implemented in, but not limited to, the following manner.

The RAN device first obtains information about uplink channels of one or more terminal devices managed by the RAN device. Then, the RAN device combines the information about the uplink channels of the one or more terminal devices, and obtains a scheduled uplink bandwidth, a quantity of uplink data flows, and uplink precoding (optional) of each terminal device through calculation according to a preset optimization algorithm. The preset optimization algorithm may be an existing algorithm. A specific algorithm used to obtain the scheduled uplink bandwidth, the quantity of uplink data flows, and the uplink precoding (optional) of the terminal device through calculation is not specifically limited in this application.

S403: The RAN device determines an uplink precoding indication manner of the terminal device based on the scheduled uplink bandwidth and the quantity of uplink data flows of the terminal device.

The uplink precoding indication manner includes one of a wideband codebook indication manner, a subband codebook indication manner, a wideband precise indication manner, and a subband precise indication manner.

In an implementation, that the RAN device determines, based on the scheduled uplink bandwidth and the quantity of uplink data flows of the terminal device, the uplink precoding indication manner used by the terminal device includes:

The RAN device determines, based on the scheduled uplink bandwidth and the quantity of uplink data flows of the terminal device and according to a first rule, the uplink precoding indication manner used by the terminal device.

The first rule includes:

when the scheduled uplink bandwidth of the terminal device is less than a first threshold and the quantity of uplink data flows of the terminal device is less than a second threshold, determining that the terminal device uses the wideband codebook indication manner; or
when the scheduled uplink bandwidth of the terminal device is greater than a first threshold and the quantity of uplink data flows of the terminal device is less than a second threshold, determining that the terminal device uses the subband codebook indication manner; or
when the scheduled uplink bandwidth of the terminal device is less than a first threshold and the quantity of uplink data flows of the terminal device is greater than a second threshold, determining that the terminal device uses the wideband precise indication manner; or
when the scheduled uplink bandwidth of the terminal device is greater than a first threshold and the quantity of uplink data flows of the terminal device is greater than a second threshold, determining that the terminal device uses the subband precise indication manner; or

when the scheduled uplink bandwidth of the terminal device is equal to a first threshold and the quantity of uplink data flows of the terminal device is less than a second threshold, determining that the terminal device uses either of the wideband codebook indication manner and the subband codebook indication manner; or
when the scheduled uplink bandwidth of the terminal device is less than a first threshold and the quantity of uplink data flows of the terminal device is equal to a second threshold, determining that the terminal device uses either of the wideband codebook indication manner and the wideband precise indication manner; or
when the scheduled uplink bandwidth of the terminal device is equal to a first threshold and the quantity of uplink data flows of the terminal device is greater than a second threshold, determining that the terminal device uses either of the wideband precise indication manner and the subband precise indication manner; or
when the scheduled uplink bandwidth of the terminal device is greater than a first threshold and the quantity of uplink data flows of the terminal device is equal to a second threshold, determining that the terminal device uses either of the subband codebook indication manner and the subband precise indication manner; or
when the scheduled uplink bandwidth of the terminal device is equal to a first threshold and the quantity of uplink data flows of the terminal device is equal to a second threshold, determining that the terminal device uses any one of the wideband codebook indication manner, the subband codebook indication manner, the wideband precise indication manner, and the subband precise indication manner.

It should be understood that the first rule separately defines to-be-used uplink precoding indication manners corresponding to different scheduled uplink bandwidths and different quantities of uplink data flows of the terminal device, and both the RAN device and the terminal device may use the first rule.

Specifically, when the scheduled uplink bandwidth of the terminal device is less than the first threshold and the quantity of uplink data flows of the terminal device is less than the second threshold, that is, when the uplink bandwidth and the quantity of data flows that are used by the terminal device are small, the terminal device uses the wideband codebook indication manner. This can ensure precision of to-be-used uplink precoding learned of by the terminal device, and can reduce system overheads. Alternatively, when the scheduled uplink bandwidth of the terminal device is greater than the first threshold and the quantity of uplink data flows of the terminal device is less than the second threshold, that is, when the uplink bandwidth used by the terminal device is large but the quantity of uplink data flows is small, the terminal device uses the subband codebook indication manner. This can greatly improve, with low indication overheads, precision of uplink precoding used by the terminal device. Alternatively, when the scheduled uplink bandwidth of the terminal device is less than the first threshold and the quantity of uplink data flows of the terminal device is greater than the second threshold, that is, when the uplink bandwidth used by the terminal device is small but the quantity of uplink data flows is large, the terminal device uses the wideband precise indication manner. This can greatly improve, with low indication overheads, precision of uplink precoding used by the terminal device. Alternatively, when the scheduled uplink bandwidth of the terminal device is greater than the first threshold and the quantity of uplink data flows of the terminal device is greater than the second threshold, that is, when both the uplink bandwidth and the quantity of uplink data flows that are used by the terminal device are large, the terminal device uses the subband precise indication manner. This can ensure that the terminal device uses uplink precoding with highest precision.

In addition, when the scheduled uplink bandwidth of the terminal device is equal to the first threshold and the quantity of uplink data flows of the terminal device is less than the second threshold, that is, when the scheduled uplink bandwidth does not exceed the first threshold and the quantity of uplink data flows is small, the terminal device may use the wideband codebook indication manner or the subband codebook indication manner. This can ensure precision of to-be-used uplink precoding learned of by the terminal device, and can reduce system overheads. Alternatively, when the scheduled uplink bandwidth of the terminal device is less than the first threshold and the quantity of uplink data flows of the terminal device is equal to the second threshold, that is, when the scheduled uplink bandwidth is small and the quantity of uplink data flows does not exceed the second threshold, the terminal device may use the wideband codebook indication manner or the wideband precise indication manner. This ensures precision of uplink precoding used by the terminal device. Alternatively, when the scheduled uplink bandwidth of the terminal device is equal to the first threshold and the quantity of uplink data flows of the terminal device is greater than the second threshold, that is, when the scheduled uplink bandwidth does not exceed the first threshold and the quantity of uplink data flows is large, the terminal device uses the wideband precise indication manner or the subband precise indication manner. This ensures precision of uplink precoding used by the terminal device. Alternatively, when the scheduled uplink bandwidth of the terminal device is greater than the first threshold and the quantity of uplink data flows of the terminal device is equal to the second threshold, that is, when the scheduled uplink bandwidth is large and the quantity of uplink data flows does not exceed the second threshold, the terminal device may use the subband codebook indication manner or the subband precise indication manner. This can ensure that the terminal device uses uplink precoding with highest precision. Alternatively, when the scheduled uplink bandwidth of the terminal device is equal to the first threshold and the quantity of uplink data flows of the terminal device is equal to the second threshold, that is, when each of the scheduled uplink bandwidth and the quantity of uplink data flows is equal to a corresponding threshold, the terminal device may use any one of the wideband codebook indication manner, the subband codebook indication manner, the wideband precise indication manner, and the subband precise indication manner. This can ensure precision of uplink precoding used by the terminal device.

It should be noted that the first threshold indicates a threshold of the scheduled uplink bandwidth, and the second threshold indicates a threshold of the quantity of uplink data flows. The threshold of the scheduled uplink bandwidth and the threshold of the quantity of uplink data flows may be specified in a standard protocol, or the threshold of the scheduled uplink bandwidth may be agreed upon by the RAN device and the terminal device through negotiation, or the threshold of the scheduled uplink bandwidth may be determined by the RAN device and notified to the terminal device, or the threshold of the scheduled uplink bandwidth and the threshold of the quantity of uplink data flows may be set based on an actual requirement. This is not specifically limited in this application.

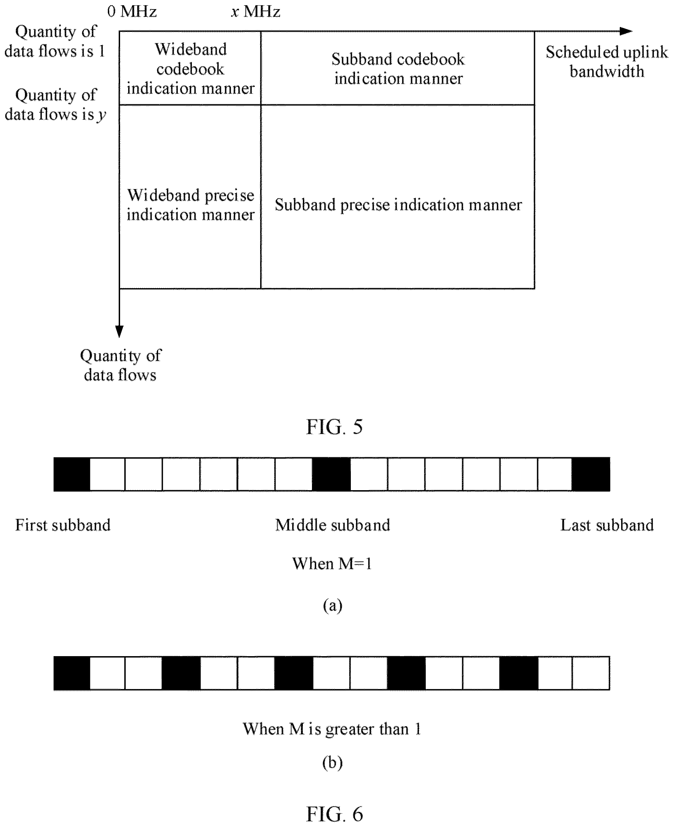

For example, the RAN device may select an appropriate uplink precoding indication manner for the terminal device in a manner shown in FIG. 5. Specifically, when the scheduled uplink bandwidth of the terminal device is less than $x$ MHz and the quantity of data flows of the terminal device is less than y, the terminal device uses the wideband codebook indication manner; or when the scheduled uplink bandwidth of the terminal device is greater than $x$ MHz and the quantity of data flows of the terminal device is less than y, the terminal device uses the subband codebook indication manner; or when the scheduled uplink bandwidth of the terminal device is less than $x$ MHz and the quantity of data flows of the terminal device is greater than $y$, the terminal device uses the wideband precise indication manner; or when the scheduled uplink bandwidth of the terminal device is greater than $x$ MHz and the quantity of data flows of the terminal device is greater than y, the terminal device uses the subband precise indication manner. Both x and y are greater than 0.

S404: The RAN device sends first information to the terminal device, where the first information indicates the uplink precoding indication manner.

Correspondingly, the terminal device receives the first information from the RAN device.

The uplink precoding indication manner includes one of the wideband codebook indication manner, the subband codebook indication manner, the wideband precise indication manner, and the subband precise indication manner.

When the RAN device performs step S404, the following several specific sub-embodiments may be specifically included for implementation.

**Sub-embodiment 1**

The RAN device may determine the uplink precoding indication manner of the terminal device by performing step S403. Further, that the RAN device indicates a corresponding uplink precoding indication manner to the terminal device may include, but is not limited to, the following two implementations.

In a first implementation, the RAN device sends the first information to the terminal device, where the first information includes first downlink control information (downlink control information, DCI). The first DCI carries 2-bit (bit) information, and the 2-bit information indicates the uplink precoding indication manner used by the terminal device.

For example, the RAN device may additionally configure 2 bits in existing DCI in a standard, and explicitly indicate the precoding indication manner to the terminal device. If the 2 bits correspond to '00', it indicates that the wideband codebook indication manner is used; if the 2 bits correspond to '01', it indicates that the subband codebook indication manner is used; if the 2 bits correspond to '10', it indicates that the wideband precise indication manner is used; or if the 2 bits correspond to '11', it indicates that the subband precise indication manner is used. According to the rule, after receiving the DCI sent by the RAN device, the terminal device may quickly determine the to-be-used precoding indication manner from decoded DCI.

It should be noted that a correspondence between a specific value of the 2 bits and an uplink precoding indication manner indicated by the 2 bits is merely an example. The correspondence may be specified in a standard protocol, or may be agreed upon by the RAN device and the terminal device through negotiation, or may be determined by the RAN device and notified to the terminal device. This is not specifically limited in this application. In addition, the RAN device may further send new DCI to the terminal device, to indicate the uplink precoding indication manner used by the terminal device.

In the first implementation, the RAN device can flexibly and accurately indicate the uplink precoding indication manner to the terminal device by using low signaling overheads.

In a second implementation, the RAN device sends the first information to the terminal device, where the first information includes the scheduled uplink bandwidth and the quantity of uplink data flows that are used by the terminal device. For example, the first information includes first DCI, where the first DCI carries information about the scheduled uplink bandwidth and information about the quantity of uplink data flows. In this way, after receiving the first information, the terminal device may determine the to-be-used precoding indication manner based on the scheduled uplink bandwidth and the quantity of uplink data flows and according to the first rule. For details, refer to the descriptions in the following step S405.

In the second implementation, the RAN device may notify the terminal device of the scheduled uplink bandwidth and the quantity of uplink data flows that are used by the terminal device, so that the terminal device can autonomously and flexibly determine the uplink precoding indication manner. This can ensure accuracy of the uplink precoding indication manner used by the terminal device, and avoids overheads caused when the RAN device indicates the uplink precoding indication manner of the terminal device by using additional information.

Therefore, in the foregoing two implementations in Sub-embodiment 1, the RAN device or the terminal device can flexibly determine the uplink precoding indication manner of the terminal device based on different uplink data transmission characteristics (for example, the scheduled uplink bandwidth and the quantity of uplink data flows).

**Sub-embodiment 2**

Further, the first information may indicate the uplink precoding used by the terminal device. For example, the first information may further include information about the uplink precoding used by the terminal device, including the following several cases.

In a first case, when the RAN device determines that the precoding indication manner used by the terminal device is the wideband codebook indication manner or the subband codebook indication manner, the first information includes first indication information indicating an index of a codebook used by the terminal device. In this case, after receiving the first information, the terminal device may directly and accurately obtain the corresponding codebook based on the first indication information in the first information.

For example, the first information includes first DCI, and the first DCI carries the first indication information.

Optionally, the first indication information is a transmitted precoding matrix indicator (transmitted precoding matrix indicator, TPMI).

In a second case, when the RAN device determines that the precoding indication manner used by the terminal device is the wideband precise indication manner or the subband precise indication manner, the first information includes configuration information of an aperiodic CSI-RS. In this case, the RAN device sends the first information to the terminal device, and the terminal device may obtain the configuration information of the CSI-RS from the first information. When the RAN device sends the CSI-RS to the terminal device, the terminal device may accurately receive the CSI-RS from the RAN device based on the configuration information of the CSI-RS. Further, the terminal device may obtain, through calculation by using the CSI-RS, the uplink precoding used by the terminal device. This can ensure accuracy of the uplink precoding used by the terminal device. Specifically, for a manner in which the terminal device obtains the uplink precoding through calculation by using the CSI-RS, refer to the following step S406.

In an example, when the RAN device determines that the precoding indication manner used by the terminal device is the wideband precise indication manner, the RAN device may indicate the uplink precoding to the terminal device in the following manner.

First, the RAN device determines M subbands from a plurality of subbands in the scheduled uplink bandwidth of each terminal device, where M is an integer greater than 0. Then, the RAN device obtains first precoding on each of the M subbands. Further, the RAN device processes a to-be-sent CSI-RS on each subband by using the first precoding on each subband, to obtain a first signal. Finally, the RAN device sends the corresponding first signal to the terminal device on the M subbands. The terminal device receives M second signals sent by the RAN device, where the M second signals are signals obtained by performing downlink channel processing on M first signals, the M first signals are obtained by the RAN device by processing CSI-RSs by using first precoding on M subbands in the scheduled uplink bandwidth, and M is an integer greater than 0. Then, the terminal device determines M equivalent channel matrices based on the M second signals and the CSI-RSs, where the equivalent channel matrix is equal to a product of a downlink channel matrix and the first precoding. Finally, the terminal device uses an average value of the M equivalent channel matrices as the uplink precoding of the terminal device.

It should be understood that the first precoding is used to perform precoding processing on the CSI-RS.

Optionally, the M subbands in the scheduled uplink bandwidth are agreed upon by the RAN device and the terminal device, or the M subbands are subbands with a largest signal-to-noise ratio in the plurality of subbands in the scheduled uplink bandwidth.

For example, the scheduled uplink bandwidth is divided into 15 subbands. When a quantity M of selected subbands is 1, the subband may be selected in, but not limited to, the following two selection manners.

In a fixed selection manner, as shown in (a) in FIG. 6, the RAN device and the terminal device agree, according to a protocol, that a specific subband is fixedly selected, where the subband may be a first subband, a middle subband, or a last subband.

In a variable selection manner, the RAN device selects one subband with a largest signal-to-noise ratio or a largest signal-to-interference-plus-noise ratio, and notifies the terminal device of the subband by using DCI signaling.

When the quantity M of selected subbands is greater than 1, the subbands may be selected in, but not limited to, the following two selection manners.

In a fixed selection manner, as shown in (b) in FIG. 6, the RAN device and the terminal device agree, according to a protocol, that M subbands are selected at an equal spacing from a same start location.

In a variable selection manner, the RAN device selects M subbands with a largest signal-to-noise ratio or a largest signal-to-interference-plus-noise ratio, and notifies the terminal device of the M subbands by using DCI signaling.

It should be noted that, optionally, before sending the first DCI to the terminal device, the RAN device may perform precoding processing on the first DCI. This can improve transmission reliability and increase a system capacity. Correspondingly, when receiving first DCI obtained by performing the precoding processing, the terminal device also needs to perform decoding processing on the first DCI, to accurately obtain information carried in the first DCI.

Based on the second case, before the RAN device sends the CSI-RS to the terminal device, the first DCI is further used to notify the RAN device whether to send the CSI-RS. To be specific, the RAN device further notifies, by using the first DCI, the terminal device whether the RAN device sends the CSI-RS, so that the terminal device makes a receiving-related preparation before receiving the CSI-RS, for example, receives a channel and a resource that are to be used. This can ensure that the CSI-RS can be accurately received, and can avoid a waste of system resources caused when the terminal device monitors the CSI-RS for long time.

For example, the RAN device may additionally configure 2 bits in existing DCI in a standard. If the 2 bits correspond to '00' or '01', it indicates that the RAN device does not send the CSI-RS; or if the 2 bits correspond to '10' or '11', it indicates that the RAN device sends the CSI-RS.

In this case, if the terminal device determines, based on the first DCI, that the RAN device sends the CSI-RS, the terminal device may make a receiving-related preparation before receiving the CSI-RS, for example, receives a channel and a resource that are to be used. This ensures that the terminal device can accurately receive the CSI-RS. Alternatively, if the terminal device determines, based on the first DCI, that the RAN device does not send the CSI-RS, a waste of system resources caused when the terminal device monitors the CSI-RS for long time can be avoided.

It should be noted that, in the foregoing examples, a function of additionally configuring the 2 bits in the existing DCI in the standard may not be limited to indicating the foregoing four precoding indication manners, or may be used to indicate, to the terminal device, whether the RAN device sends the CSI-RS. This is not limited in this application. In addition, the RAN device may send new information, for example, new DCI, to the terminal device, and additionally configure 2 bits in the new DCI, to indicate, to the terminal device, whether the RAN device sends the CSI-RS. In this case, the 2 bits additionally configured in the new DCI are not related to the 2 bits additionally configured in the first DCI indicating the four indication manners.

Therefore, in Sub-embodiment 2, for the first case (the wideband codebook indication manner and the subband codebook indication manner) and the second case (the wideband precise indication manner and the subband precise indication manner), the RAN device may specifically and flexibly indicate to-be-used uplink precoding to the terminal device by performing the foregoing operations. This can ensure accuracy of uplink precoding used by the terminal device, and can reduce system overheads.

**Sub-embodiment 3**

In an implementation, based on the foregoing four uplink precoding indication manners, that the RAN device further indicates a corresponding quantity of data flows to the terminal device by delivering the first DCI may specifically include the following operations.

When the RAN device determines that the terminal device uses a wideband codebook precoding indication manner, the RAN device jointly indicates the quantity of uplink data flows of the terminal device by using the first DCI and the TPMI.

When the RAN device determines that the terminal device uses the wideband/subband precise indication manner, the first DCI sent by the RAN device to the terminal device includes a preset field, where the preset field indicates the quantity of uplink data flows of the terminal device; or the first DCI includes a TPMI field, where the TPMI field indicates the quantity of uplink data flows of the terminal device. For example, the first DCI includes an existing TPMI field, and a first field in the TPMI field specially indicates the quantity of uplink data flows of the terminal device.

When the RAN device determines that the terminal device uses the subband codebook indication manner, for each subband, the RAN device jointly indicates the quantity of uplink data flows of the terminal device on the subband by using the first DCI and the TPMI. For example, the RAN device sends the first DCI to the terminal device on a plurality of uplink subbands. Each piece of first DCI includes a TPMI field, where the TPMI field indicates the quantity of uplink data flows of the terminal device. In this case, the terminal device uses, as the quantity of uplink data flows of the terminal device, an average value of quantities of uplink data flows correspondingly indicated by the plurality of uplink subbands.

It should be noted that, that the RAN device jointly indicates the quantity of uplink data flows of the terminal device by using the first DCI and the TPMI may be specifically as follows: The RAN device sends the first DCI to the terminal device, where the first DCI includes a TPMI field, and the TPMI field indicates an index of a codebook that needs to be used by the terminal device. In this case, after obtaining the first DCI, the terminal device may determine the index of the to-be-used codebook based on an indication of the TPMI field in the first DCI, and then the terminal device may determine an uplink precoding matrix corresponding to the index. A quantity of columns of the uplink precoding matrix is the quantity of uplink data flows.

Therefore, in Sub-embodiment 3, the RAN device may flexibly indicate the corresponding quantity of data flows to the terminal device in the precoding indication manner used by the terminal device. This can ensure accuracy of the quantity of data flows of the terminal device obtained by the terminal device.

S405: The terminal device obtains, based on the first information, the uplink precoding indication manner used by the terminal device.

The uplink precoding indication manner includes one of the wideband codebook indication manner, the subband codebook indication manner, the wideband precise indication manner, and the subband precise indication manner.

Correspondingly, the terminal device specifically performs step S405 based on the several sub-embodiments in step S404.

Correspondingly, that the terminal device receives the first information from the RAN device, and obtains, based on the first information, the corresponding uplink precoding indication manner indicated by the terminal device may include, but is not limited to, the following two implementations.

In a first implementation, the terminal device receives the first information from the RAN device. For example, the first information includes first DCI, where the first DCI carries 2-bit (bit) information, and the 2-bit information indicates the uplink precoding indication manner used by the terminal device.

For example, if the 2 bits carried in the first DCI correspond to '00', the terminal device uses the wideband codebook indication manner; if the 2 bits correspond to '01', the terminal device uses the subband codebook indication manner; if the 2 bits correspond to '10', the terminal device uses the wideband precise indication manner; or if the 2 bits correspond to 1', the terminal device uses the subband precise indication manner. It should be noted that after receiving the first DCI sent by the RAN device, the terminal device needs to first decode the first DCI, to obtain a corresponding to-be-used precoding indication manner.

In the first implementation, the RAN device flexibly and accurately indicates the uplink precoding indication manner to the terminal device with low signaling overheads, and the terminal device may directly and quickly determine the to-be-used uplink precoding indication manner based on the first information.

In a second implementation, the terminal device receives the first information from the RAN device, where the first information includes the scheduled uplink bandwidth and the quantity of uplink data flows that are used by the terminal device. For example, the first information includes first DCI, where the first DCI carries information about the scheduled uplink bandwidth and information about the quantity of uplink data flows.

That the terminal device may determine the to-be-used precoding indication manner based on the scheduled uplink bandwidth and the quantity of uplink data flows and according to the first rule may specifically include:

when the scheduled uplink bandwidth of the terminal device is less than a first threshold and the quantity of uplink data flows of the terminal device is less than a second threshold, determining that the terminal device uses the wideband codebook indication manner; or

when the scheduled uplink bandwidth of the terminal device is greater than a first threshold and the quantity of uplink data flows of the terminal device is less than a second threshold, determining that the terminal device uses the subband codebook indication manner; or

when the scheduled uplink bandwidth of the terminal device is less than a first threshold and the quantity of uplink data flows of the terminal device is greater than a second threshold, determining that the terminal device uses the wideband precise indication manner; or

when the scheduled uplink bandwidth of the terminal device is greater than a first threshold and the quantity of uplink data flows of the terminal device is greater than a second threshold, determining that the terminal device uses the subband precise indication manner; or

when the scheduled uplink bandwidth of the terminal device is equal to a first threshold and the quantity of uplink data flows of the terminal device is less than a second threshold, determining that the terminal device uses either of the wideband codebook indication manner and the subband codebook indication manner; or

when the scheduled uplink bandwidth of the terminal device is less than a first threshold and the quantity of uplink data flows of the terminal device is equal to a second threshold, determining that the terminal device uses either of the wideband codebook indication manner and the wideband precise indication manner; or

when the scheduled uplink bandwidth of the terminal device is equal to a first threshold and the quantity of uplink data flows of the terminal device is greater than a second threshold, determining that the terminal device uses either of the wideband precise indication manner and the subband precise indication manner; or

when the scheduled uplink bandwidth of the terminal device is greater than a first threshold and the quantity of uplink data flows of the terminal device is equal to a second threshold, determining that the terminal device uses either of the subband codebook indication manner and the subband precise indication manner; or

when the scheduled uplink bandwidth of the terminal device is equal to a first threshold and the quantity of uplink data flows of the terminal device is equal to a second threshold, determining that the terminal device uses any one of the wideband codebook indication manner, the subband codebook indication manner, the wideband precise indication manner, and the subband precise indication manner.

It should be noted that, for determining, by the terminal device, the to-be-used uplink precoding indication manner based on the scheduled uplink bandwidth and the quantity of uplink data flows of the terminal device and according to the first rule, refer to the descriptions of determining, by the RAN device, the uplink precoding indication manner used by the terminal device based on the scheduled uplink bandwidth and the quantity of uplink data flows of the terminal device and according to the first rule in FIG. 5.

In the second implementation, the terminal device may flexibly determine the to-be-used uplink precoding indication manner based on the scheduled uplink bandwidth and the quantity of uplink data flows of the terminal device and according to the first rule. This can ensure accuracy of the uplink precoding indication manner used by the terminal device, and avoids overheads caused when the RAN device indicates the uplink precoding indication manner of the terminal device by using additional information.

Therefore, in the foregoing two implementations, the terminal device can flexibly determine, based on different uplink data transmission characteristics (for example, the scheduled uplink bandwidth and the quantity of uplink data flows), the uplink precoding indication manner used by the terminal device.

For the foregoing four uplink precoding indication manners, that the terminal device may further obtain the corresponding quantity of data flows by using the first DCI may specifically include the following several cases.

In a first case, when it is determined that the terminal device uses the wideband codebook indication manner, the first information received by the terminal device includes the first DCI, and the terminal device determines the quantity of uplink data flows based on a joint indication of the first DCI and the TPMI.

In a second case, when it is determined that the terminal device uses the subband codebook indication manner, the terminal device receives downlink control information from the plurality of subbands, and determines the quantity of uplink data flows based on a joint indication of the first DCI and TPMIs corresponding to the plurality of subbands.

In a third case/a fourth case, when it is determined that the terminal device uses the wideband precise indication manner/subband precise indication manner, the first information received by the terminal device includes the first DCI, where the first DCI includes a preset field. Because the preset field indicates the quantity of uplink data flows of the terminal device, the terminal device determines the quantity of uplink data flows based on the preset field. Alternatively, the first DCI includes a transmitted precoding matrix indicator TPMI field, where the TPMI field indicates the quantity of uplink data flows of the terminal device. In this case, the terminal device may determine the quantity of uplink data flows based on the TPMI field.

Therefore, when the terminal device uses different uplink precoding indication manners, the terminal device may further flexibly and accurately obtain the quantity of data flows of the terminal device by using the first DCI.

S406: The terminal device determines the uplink precoding in the uplink precoding indication manner.

It should be noted that step S406 is an optional step.

The first information may further indicate the uplink precoding used by the terminal device. For example, the first information may further include information about the uplink precoding used by the terminal device.

That the terminal device determines the uplink precoding based on the first information may specifically include the following several cases.

In a first case, when the terminal device uses the wideband codebook indication manner or the subband codebook indication manner, the terminal device receives the first information from the RAN device. For example, the first information includes first DCI, where the first DCI further carries a transmitted precoding matrix indicator TPMI, and the TPMI indicates a codebook used by the terminal device. In this case, the terminal device may accurately determine, based on the TPMI in the first DCI, the codebook corresponding to an index of the codebook, and use, as the uplink precoding used by the terminal device, the codebook corresponding to the index.

It should be noted that, when the terminal device uses the wideband codebook indication manner or the subband codebook indication manner, the terminal device may accurately determine, based on the TPMI in the first DCI, a codebook manner corresponding to the index of the codebook. Specifically, a corresponding codebook may be determined with reference to an existing codebook based precoding indication manner. Details are not described herein again.

In a second case, when the RAN device determines that the terminal device uses the wideband precise indication manner or the subband precise indication manner, the terminal device receives the first information from the RAN device, where the first information includes configuration information of an aperiodic CSI-RS. In this case, when the RAN device sends the CSI-RS to the terminal device, the terminal device can accurately receive the CSI-RS based on the configuration information of the CSI-RS.

Optionally, the terminal device receives the first information from the RAN device, where the first information includes first DCI, the first DCI carries 2 bits, and the 2 bits are used to notify the RAN device whether to send the CSI-RS.

If the terminal device determines that the RAN device sends the CSI-RS, the terminal device makes a receiving-related preparation before receiving the CSI-RS, for example, receives a channel and a resource that are to be used. This ensures that the terminal device can accurately receive the CSI-RS. Alternatively, if the terminal device determines that the RAN device does not send the CSI-RS, a waste of system resources caused when the terminal device monitors the CSI-RS for long time can be avoided.

For example, if the 2 bits in the first DCI correspond to '00' or '01', the terminal device may determine that the RAN device does not send the CSI-RS; or if the 2 bits correspond to '10' or '11', the terminal device may determine that the RAN device sends the CSI-RS.

It should be noted that the terminal device may alternatively receive new information, for example, new DCI, from the RAN device. The new DCI is used to notify the RAN device whether to send the CSI-RS.

When the terminal device receives the CSI-RS from the RAN device, the terminal device may accurately obtain the uplink precoding through calculation by using the CSI-RS. Specifically, when the terminal device uses the wideband precise indication manner or the subband precise indication manner, for a manner of obtaining, by the terminal device, the corresponding uplink precoding through calculation by using the CSI-RS, refer to an existing solution of determining precoding based on the CSI-RS, and details are not described herein again; or refer to the following example implementation.

In an example, when the terminal device determines that the used precoding indication manner is the wideband precise indication manner, that the terminal device determines the uplink precoding in the uplink precoding indication manner may specifically include:

The terminal device receives M second signals sent by the RAN device, where the M second signals are signals obtained by performing downlink channel processing on M first signals, the M first signals are obtained by the RAN device by processing CSI-RSs by using first precoding on M subbands in the scheduled uplink bandwidth, and M is an integer greater than 0;

the terminal device determines M equivalent channel matrices based on the M second signals and the CSI-RSs, where the equivalent channel matrix is equal to a product of a downlink channel matrix and the first precoding; and

the terminal device uses an average value of the M equivalent channel matrices as the uplink precoding of the terminal device.

Optionally, the M subbands in the scheduled uplink bandwidth are agreed upon by the RAN device and the terminal device, or the M subbands in the scheduled uplink bandwidth are indicated by the first DCI, and the M subbands are subbands with a largest signal-to-noise ratio in the plurality of subbands in the scheduled uplink bandwidth.

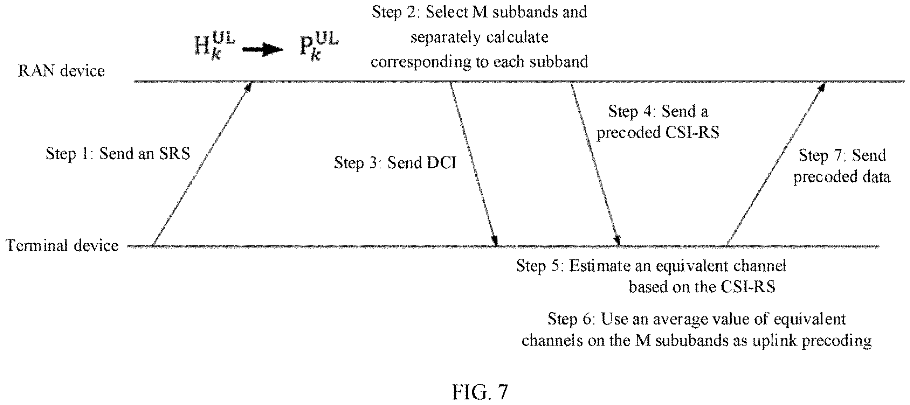

For example, when the precoding indication manner used by the terminal device is the wideband precise indication manner, the uplink precoding may be determined by using the following steps, and the uplink precoding is used to send data. As shown in FIG. 7, interaction between a $k^{th}$ terminal device ($UE_k$) and a RAN device is used as an example for description. Specific steps are included below.

Step 1: The terminal device $UE_k$ sends an SRS to the RAN device.

After step 1, the RAN device side performs the following steps.

The RAN device measures an uplink channel $H_k^{UL}$ of $UE_k$ based on the SRS sent by $UE_k$, and obtains a downlink channel $H_k^{DL}$ of $UE_k$ based on reciprocity between an uplink and a downlink.

The RAN device obtains uplink precoding $P_k^{UL}$ of $UE_k$ based on $H_k^{UL}$ of $UE_k$.

Step 2: The RAN device selects M subbands from an uplink bandwidth, and obtains precoding $P_{k,m}^{DL}$ of a downlink CSI-RS on each subband, that is, $H_{k,m}^{DL} \times P_{k,m}^{DL} = P_k^{UL}$ is met. Herein, M is a positive integer, and m indicates any one of the M subbands.

After step 2, the RAN device performs, by using $P_{k,m}^{DL}$ on each subband, precoding processing on the CSI-RS sent on each subband.

Step 3: The RAN device sends DCI to $UE_k$, where the DCI indicates that the RAN device is to send the CSI-RS.

Step 4: The RAN device sends a corresponding precoded CSI-RS to $UE_k$ by using the M subbands.

Step 5: $UE_k$ obtains an estimated equivalent channel of each of the M subbands based on CSI-RSs on the M subbands, where the equivalent channel may be represented as $H_{k,m}^{DL} P_{k,m}^{DL}$.

It should be noted that, in step 4, the corresponding precoded CSI-RS sent by the RAN device to $UE_k$ is equivalent to the foregoing first signal, where the first signal may be represented as $P_{k,m}^{DL} \times CSI\text{-}RS$. The first signal further needs to be sent to $UE_k$ through the downlink channel. In this case, the first signal received by $UE_k$ is a second signal obtained by performing downlink channel processing, where the second signal may be represented as $H_{k,m}^{DL} \times P_{k,m}^{DL} \times CSI\text{-}RS$. Because $UE_k$ knows the CSI-RS, $UE_k$ may obtain $H_{k,m}^{DL} P_{k,m}^{DL}$ through calculation based on the received second signal and the CSI-RS. The symbol "$\times$" indicates a product.

Step 6: $UE_k$ uses an average value of equivalent channels on the M subbands as uplink precoding of $UE_k$.

In step 6, it is determined that uplink precoding of $UE_k$ is more accurate, to avoid a large result error caused by uplink precoding of $UE_k$ obtained through calculation based on one subband.

Step 7: $UE_k$ sends, to the RAN device, uplink data after uplink precoding processing is performed.

In conclusion, this application provides a precoding indication manner determining method. The method includes: A RAN device obtains information about an uplink channel of a terminal device; then, the RAN device determines a scheduled uplink bandwidth and a quantity of uplink data flows of the terminal device based on the information about the uplink channel of the terminal device, and determines information about uplink precoding; further, the RAN device determines an uplink precoding indication manner of the terminal device based on the scheduled uplink bandwidth and the quantity of uplink data flows of the terminal device; and finally, the RAN device sends first information to the terminal device, where the first information indicates the uplink precoding indication manner. According to the method, the uplink precoding indication manner can be flexibly and accurately determined for the terminal device. This can ensure accuracy of uplink precoding used by the terminal device while reducing unnecessary indication overheads.

Communication apparatuses provided in embodiments of this application are described below.

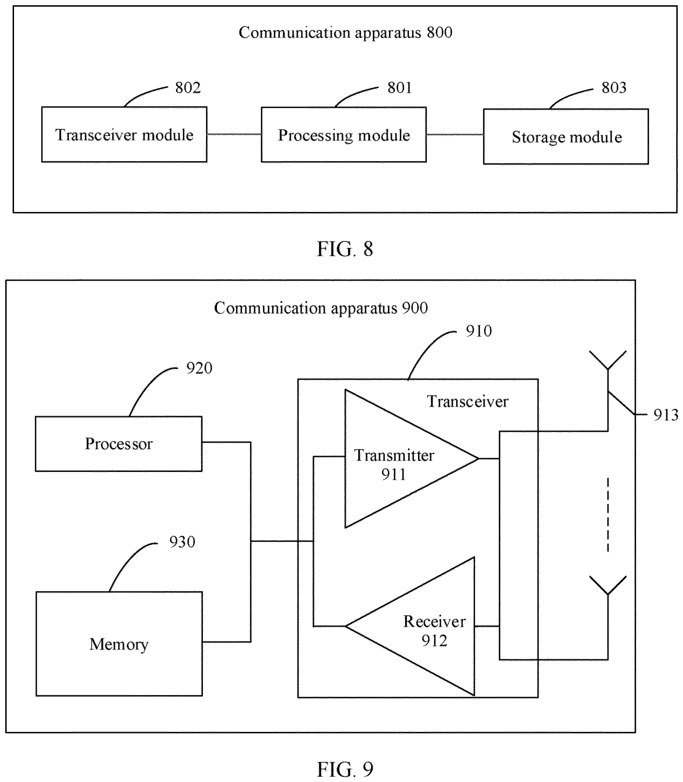

Based on a same technical concept, an embodiment of this application provides a communication apparatus. The apparatus may be used in the RAN device in the method in this application. To be specific, the apparatus includes modules or units that are in a one-to-one correspondence with methods/operations/steps/actions performed by the RAN device in the foregoing embodiments. The modules or units may be hardware circuits or software, or may be implemented by hardware circuits in combination with software. The communication apparatus has a structure shown in FIG. 8.

As shown in FIG. 8, the communication apparatus 800 may include a processing module 801. The processing module 801 is equivalent to a processing unit, and may be configured to perform a data processing and/or beam indication configuration process.

Optionally, the communication apparatus 800 further includes a transceiver module 802, where the transceiver module 802 may implement a corresponding communication function. Specifically, the transceiver module 802 may specifically include a receiving module and/or a sending module. The receiving module may be configured to receive information, data, and/or the like, and the sending module may be configured to send information and/or data. The transceiver module may also be referred to as a communication interface or a transceiver unit.

Optionally, the communication apparatus 800 may further include a storage module 803. The storage module 803 is equivalent to a storage unit, and may be configured to store instructions and/or data. The processing module 801 may read the instructions and/or the data in the storage module, so that the communication apparatus implements the foregoing method embodiments.

The communication apparatus 800 may be configured to perform an action performed by the RAN device in the foregoing method embodiments. The communication apparatus 800 may be the RAN device or a component that may be disposed in the RAN device. The transceiver module 802 is configured to perform a receiving-related operation on the RAN device side in the foregoing method embodiments, and the processing module 801 is configured to perform a processing-related operation on the RAN device side in the foregoing method embodiments.

For example, the transceiver module 802 may include a sending module and a receiving module. The sending module is configured to perform a sending operation in the foregoing method embodiments. The receiving module is configured to perform a receiving operation in the foregoing method embodiments.

It should be noted that the communication apparatus 800 may include the sending module, but does not include the receiving module. Alternatively, the communication apparatus 800 may include the receiving module, but does not include the sending module. This may be specifically determined based on whether the foregoing solution performed by the communication apparatus 800 includes a sending action and a receiving action.

In an example, the communication apparatus 800 is configured to perform an action performed by the RAN device in the embodiment shown in FIG. 4.

For example, the transceiver module 802 is configured to obtain information about an uplink channel of a terminal device. The transceiver module 802 is further configured to send first information to the terminal device, where the first information indicates an uplink precoding indication manner.

The processing module 801 is configured to determine a scheduled uplink bandwidth and a quantity of uplink data flows of the terminal device based on the information about the uplink channel of the terminal device. The processing module 801 is further configured to determine the uplink precoding indication manner of the terminal device based on the scheduled uplink bandwidth and the quantity of uplink data flows of the terminal device.

It should be understood that a specific process in which the modules perform the foregoing corresponding processes is described in detail in the foregoing method embodiments. For brevity, details are not described herein again.

The processing module 801 in the foregoing embodiment may be implemented by at least one processor or a processor-related circuit. The transceiver module 802 may be implemented by a transceiver or a transceiver-related circuit. The storage module may be implemented by at least one memory.

Based on a same technical concept, an embodiment of this application provides a communication apparatus. The apparatus may be used in the terminal device in the method in this application. To be specific, the apparatus includes modules or units that are in a one-to-one correspondence with methods/operations/steps/actions performed by the terminal device in the foregoing embodiments. The modules or units may be hardware circuits or software, or may be implemented by hardware circuits in combination with software. The communication apparatus may also have a structure shown in FIG. 8.

As shown in FIG. 8, the communication apparatus 800 may include a processing module 801. The processing module 801 is equivalent to a processing unit, and may be configured to perform a data processing and/or uplink precoding determining process.

Optionally, the communication apparatus 800 further includes a transceiver module 802, where the transceiver module 802 may implement a corresponding communication function. Specifically, the transceiver module 802 may specifically include a receiving module and/or a sending module. The receiving module may be configured to receive information, data, and/or the like, and the sending module may be configured to send information and/or data. The transceiver module may also be referred to as a communication interface or a transceiver unit.

Optionally, the communication apparatus 800 may further include a storage module 803. The storage module 803 is equivalent to a storage unit, and may be configured to store instructions and/or data. The processing module 801 may read the instructions and/or the data in the storage module, so that the communication apparatus implements the foregoing method embodiments.

The communication apparatus 800 may be configured to perform an action performed by the terminal device in the foregoing method embodiments. The communication apparatus 800 may be the terminal device or a component that may be disposed in the terminal device. The transceiver module 802 is configured to perform a receiving-related operation on the terminal device side in the foregoing method embodiments, and the processing module 801 is configured to perform a processing-related operation on the terminal device side in the foregoing method embodiments.

For example, the transceiver module 802 may include a sending module and a receiving module. The sending module is configured to perform a sending operation in the foregoing method embodiments. The receiving module is configured to perform a receiving operation in the foregoing method embodiments.

It should be noted that the communication apparatus 800 may include the sending module, but does not include the receiving module. Alternatively, the communication apparatus 800 may include the receiving module, but does not include the sending module. This may be specifically determined based on whether the foregoing solution performed by the communication apparatus 800 includes a sending action and a receiving action.

In an example, the communication apparatus 800 is configured to perform an action performed by the terminal device in the embodiment shown in FIG. 4.

For example, the transceiver module 802 is configured to receive first information from a RAN device, where the first information indicates a corresponding precoding indication manner.

The processing module 801 is configured to obtain the to-be-used uplink precoding indication manner based on the first information. The processing module 801 is further configured to determine uplink precoding in the uplink precoding indication manner.

It should be understood that a specific process in which the modules perform the foregoing corresponding processes is described in detail in the foregoing method embodiments. For brevity, details are not described herein again.

The processing module 801 in the foregoing embodiment may be implemented by at least one processor or a processor-related circuit. The transceiver module 802 may be implemented by a transceiver or a transceiver-related circuit. The storage module may be implemented by at least one memory.

This application further provides a communication apparatus. The communication apparatus may be a RAN device, a processor of the RAN device, or a chip. The communication apparatus may be configured to perform an operation performed by the RAN device in the foregoing method embodiments. Alternatively, the communication apparatus may be a terminal device, a processor of the terminal device, or a chip. The communication apparatus may be configured to perform an operation performed by the terminal device in the foregoing method embodiments.

When the communication apparatus 900 is a RAN device, for example, a base station, FIG. 9 is a diagram of a simplified structure of the RAN device. As shown in FIG. 9, the RAN device includes a transceiver 910, a processor 920, and a memory 930. The transceiver 910 includes a receiver 912, a transmitter 911, a radio frequency circuit (not shown in the figure), an antenna 913, and an input/output apparatus (not shown in the figure). The memory 930 may store computer program code.

The processor 920 is mainly configured to: process a communication protocol and communication data, control the RAN device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna 913 is mainly configured to receive and send a radio frequency signal in a form of an electromagnetic wave. The input/output apparatus, for example, a touchscreen, a display, or a keyboard, is mainly configured to: receive data input by a user, and output data to the user. It should be noted that some types of terminal devices may have no input/output apparatus.

When needing to send data, after performing baseband processing on the to-be-sent data, the processor 920 outputs a baseband signal to the radio frequency circuit; and the radio frequency circuit performs radio frequency processing on the baseband signal and then sends a radio frequency signal to the outside in a form of an electromagnetic wave through the antenna. When data is sent to a terminal device, the radio frequency circuit receives a radio frequency signal through the antenna, converts the radio frequency signal into a baseband signal, and outputs the baseband signal to the processor. The processor 920 converts the baseband signal into data, and processes the data. For ease of description, FIG. 9 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit (a transceiver module) of the terminal device, and the processor that has a processing function may be considered as a processing unit (a processing module) of the terminal device.

As shown in FIG. 9, the RAN device includes a transceiver 910, a processor 920, and a memory 930. The transceiver 910 may also be referred to as a transceiver unit, a transceiver machine, a transceiver apparatus, or the like. The processor 920 may also be referred to as a processing unit, a processing board, a processing module, a processing apparatus, or the like.

Optionally, a component that is in the transceiver 910 and that is configured to implement a receiving function may be considered as a receiving module, and a component that is in the transceiver 910 and that is configured to implement a sending function may be considered as a sending unit or a sending module. In other words, the transceiver 910 includes a transmitter 911 and a receiver 912. The transceiver 910 sometimes may also be referred to as a transceiver machine, a transceiver module, a transceiver circuit, or the like. The transmitter 911 sometimes may also be referred to as a transmitter machine, a transmitting module, a transmitting circuit, or the like. The receiver 912 sometimes may also be referred to as a receiver machine, a receiving module, a receiving circuit, or the like.

For example, in an implementation, the processor 920 is configured to perform a processing action on the RAN device side in the embodiment shown in FIG. 4, and the transceiver 910 is configured to perform receiving and sending actions on the RAN device side in FIG. 4. For example, the transceiver 910 is configured to perform the operation of S401 or S404 in the embodiment shown in FIG. 4. Specifically, the transceiver 910 may receive information about an uplink channel from a terminal device, and send first information to the terminal device. The processor 920 is configured to perform the processing operation of S402 or S403 in the embodiment shown in FIG. 4. Specifically, the processor 920 may determine a scheduled uplink bandwidth and a quantity of uplink data flows of the terminal device based on the information about the uplink channel of the terminal device, and further determine an uplink precoding indication manner of the terminal device.

It should be understood that FIG. 9 is merely an example but not a limitation, and the RAN device including the transceiver module and the processing module may not depend on the structure shown in FIG. 8.

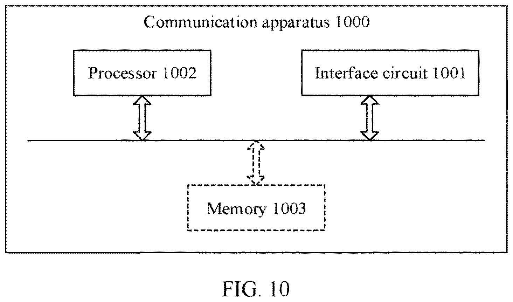

When the communication apparatus is a chip, FIG. 10 is a diagram of a simplified structure of a chip. The chip includes an interface circuit 1001 and a processor 1002. The interface circuit 1001 and the processor 1002 are coupled to each other. It may be understood that the interface circuit 1001 may be a transceiver or an input/output interface, and the processor may be a processing module, a microprocessor, or an integrated circuit integrated on the chip. The sending operation performed by the RAN device in the foregoing method embodiments may be understood as an output of the chip, and the receiving operation performed by the RAN device in the foregoing method embodiments may be understood as an input of the chip.

Optionally, the communication apparatus 1000 may further include a memory 1003, configured to: store instructions executed by the processor 1002, or store input data required for running instructions by the processor 1002, or store data generated after the processor 1002 runs instructions. Optionally, the memory 1003 may be alternatively integrated with the processor 1002.

When the communication apparatus 900 is a terminal device, FIG. 9 is a diagram of a simplified structure of the terminal device. The terminal device includes a transceiver 910, a processor 920, and a memory 930.

The processor 920 is mainly configured to: perform baseband processing, control the terminal device, and the like. The processor 920 is usually a control center of a base station, may be usually referred to as a processor, and is configured to control the base station to perform a processing operation on the RAN device side in the foregoing method embodiments. The memory 930 is mainly configured to store computer program code and data. The transceiver 910 is mainly configured to: receive and send a radio frequency signal, and perform conversion between the radio frequency signal and a baseband signal. The transceiver 910 may be usually referred to as a transceiver module, a transceiver machine, a transceiver circuit, or the like. The transceiver module of the transceiver 910 may also be referred to as a transceiver machine, a transceiver, or the like, and includes an antenna 913 and a radio frequency circuit (not shown in the figure). The radio frequency circuit is mainly configured to perform radio frequency processing. Optionally, a component that is in the transceiver 910 and that is configured to implement a receiving function may be considered as a receiver, and a component that is in the transceiver 910 and that is configured to implement a sending function may be considered as a transmitter. In other words, the transceiver 910 includes a transmitter 911 and a receiver 912. The receiver may also be referred to as a receiving module, a receiver machine, a receiving circuit, or the like, and the transmitter may be referred to as a transmitting module, a transmitter machine, a transmitting circuit, or the like.

The transceiver 910 and the memory 930 may include one or more boards. Each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards may share one or more memories, or a plurality of boards may simultaneously share one or more processors.

For example, in an implementation, the transceiver module of the transceiver 910 is configured to perform receiving and sending-related processes performed by the terminal device in the embodiment shown in FIG. 4. The processor 920 is configured to perform a processing-related process performed by the terminal device in the embodiment shown in FIG. 4.

It should be understood that FIG. 9 is merely an example but not a limitation. The terminal device including the processor, the memory, and the transceiver may not depend on the structure shown in FIG. 9.

When the communication apparatus is a chip, FIG. 10 is a diagram of a simplified structure of a chip. The chip includes an interface circuit 1001 and a processor 1002. The interface circuit 1001 and the processor 1002 are coupled to each other. It may be understood that the interface circuit 1001 may be a transceiver or an input/output interface, and the processor may be a processing module, a microprocessor, or an integrated circuit integrated on the chip. The sending operation performed by the terminal device in the foregoing method embodiments may be understood as an output of the chip, and the receiving operation performed by the terminal device in the foregoing method embodiments may be understood as an input of the chip.

Optionally, the communication apparatus 1000 may further include a memory 1003, configured to: store instructions executed by the processor 1002, or store input data required for running instructions by the processor 1002, or store data generated after the processor 1002 runs instructions. Optionally, the memory 1003 may be alternatively integrated with the processor 1002.

An embodiment of this application further provides a computer-readable storage medium. The computer-readable storage medium stores computer instructions used to implement the method performed by the terminal device in the foregoing method embodiments.

For example, when the computer program is executed by a computer, the computer is enabled to implement the method performed by the terminal device in the foregoing method embodiments.

An embodiment of this application further provides a computer program product including instructions. When the instructions are executed by a computer, the computer is enabled to implement the method performed by the terminal device in the foregoing method embodiments.

An embodiment of this application further provides a communication system. The communication system includes the terminal device and the RAN device in the foregoing embodiments.

An embodiment of this application further provides a chip apparatus. The chip apparatus includes a processor, configured to invoke a computer program or computer instructions that is/are stored in a memory, so that the processor performs the uplink precoding indication determining method in the embodiment shown in FIG. 4.

In a possible implementation, an input of the chip apparatus corresponds to the receiving operation in the embodiment shown in FIG. 4, and an output of the chip apparatus corresponds to the sending operation in the embodiment shown in FIG. 4.

Optionally, the processor is coupled to the memory through an interface.

Optionally, the chip apparatus further includes the memory, where the memory stores the computer program or the computer instructions.

The processor mentioned in any of the foregoing descriptions may be a general-purpose central processing unit, a microprocessor, an application-specific integrated circuit (application-specific integrated circuit, ASIC), or one or more of integrated circuits configured to control program execution of the uplink precoding indication method in embodiment shown in FIG. 4. The memory mentioned in any of the foregoing descriptions may be a read-only memory (read-only memory, ROM), another type of static storage device that can store static information and instructions, a random access memory (random access memory, RAM), or the like.

It should be noted that, for the purpose of convenient and brief description, for explanations and beneficial effects of related content in any communication apparatus provided above, refer to the corresponding method embodiments provided above. Details are not described herein again.

In this application, the RAN device or the terminal device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (which is also referred to as a main memory). An operating system at the operating system layer may be any one or more types of computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

In conclusion, this application provides a precoding indication manner determining method. The method includes: A RAN device obtains information about an uplink channel of a terminal device; then, the RAN device determines a scheduled uplink bandwidth and a quantity of uplink data flows of the terminal device based on the information about the uplink channel of the terminal device, and determines information about uplink precoding; further, the RAN device determines an uplink precoding indication manner of the terminal device based on the scheduled uplink bandwidth and the quantity of uplink data flows of the terminal device; and finally, the RAN device sends first information to the terminal device, where the first information indicates the uplink precoding indication manner. According to the method, the uplink precoding indication manner can be flexibly and accurately determined for the terminal device. This can ensure accuracy of uplink precoding used by the terminal device while reducing unnecessary indication overheads.

With descriptions of the foregoing implementations, a person skilled in the art may clearly understand that embodiments of this application may be implemented by hardware, firmware or a combination thereof. When embodiments of this application are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (digital subscriber line, DSL), or wireless technologies such as infrared, radio, and microwave, the coaxial cable, the optical fiber/cable, the twisted pair, the DSL, or the wireless technologies such as infrared, radio, and microwave are included in a definition of a medium to which the coaxial cable, the optical fiber/cable, the twisted pair, the DSL, or the wireless technologies such as infrared, radio, and microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data in a magnetic manner, and the disc copies data optically in a laser manner. The foregoing combination shall also be included in the protection scope of the computer-readable medium.

In a word, the foregoing descriptions are merely embodiments of this application and are not intended to limit the protection scope of this application. Any modification, equivalent replacement, and improvement made according to the disclosure of this application shall fall within the protection scope of this application.

**Claims**

1. A precoding indication manner determining method, comprising:

   obtaining, by a radio access network RAN device, information about an uplink channel of a terminal device;
   determining, by the RAN device, a scheduled uplink bandwidth and a quantity of uplink data flows of the terminal device based on the information about the uplink channel of the terminal device;
   determining, by the RAN device, an uplink precoding indication manner of the terminal device based on the scheduled uplink bandwidth and the quantity of uplink data flows of the terminal device; and
   sending, by the RAN device, first information to the terminal device, wherein the first information indicates the uplink precoding indication manner.

2. The method according to claim 1, wherein the determining, by the RAN device, an uplink precoding indication manner of the terminal device based on the scheduled uplink bandwidth and the quantity of uplink data flows of the terminal device comprises:

   determining, by the RAN device based on the scheduled uplink bandwidth and the quantity of uplink data flows of the terminal device and according to a first rule, the uplink precoding indication manner used by the terminal device, wherein
   the first rule comprises:

      when the scheduled uplink bandwidth of the terminal device is less than a first threshold and the quantity of uplink data flows of the terminal device is less than a second threshold, determining that the terminal device uses a wideband codebook indication manner; or
      when the scheduled uplink bandwidth of the terminal device is greater than a first threshold and the quantity of uplink data flows of the terminal device is less than a second threshold, determining that the terminal device uses a subband codebook indication manner; or
      when the scheduled uplink bandwidth of the terminal device is less than a first threshold and the quantity of uplink data flows of the terminal device is greater than a second threshold, determining that the terminal device uses a wideband precise indication manner; or
      when the scheduled uplink bandwidth of the terminal device is greater than a first threshold and the quantity of uplink data flows of the terminal device is greater than a second threshold, determining that the terminal device uses a subband precise indication manner; or

when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or

when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or

when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or

when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or

when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

3. The method according to claim 1 or 2, wherein the method further comprises:
determining, by the RAN device, information about uplink precoding of the terminal device based on the information about the uplink channel of the terminal device.

4. The method according to claim 1, wherein the obtaining, by a RAN device, information about an uplink channel of a terminal device comprises:

receiving, by the RAN device, a channel sounding reference signal SRS from the terminal device; and

determining, by the RAN device, the information about the uplink channel of the terminal device based on the SRS sent by the terminal device.

5. The method according to claim 2, wherein when the RAN device determines that the precoding indication manner used by the terminal device is the wideband codebook indication manner or the subband codebook indication manner, the first information comprises first downlink control information DCI, and the first DCI carries first indication information indicating an index of a codebook used by the terminal device.

6. The method according to claim 2, wherein when the RAN device determines that the precoding indication manner used by the terminal device is the wideband precise indication manner or the subband precise indication manner, the first information comprises configuration information of an aperiodic channel state information-reference signal CSI-RS, and the CSI-RS is used by the terminal device to determine to-be-used uplink precoding.

7. The method according to claim 5, wherein the first DCI is used to notify the RAN device whether to send a CSI-RS.

8. The method according to claim 5 or 7, wherein the first DCI carries 2-bit information, and the 2-bit information indicates the uplink precoding indication manner used by the terminal device.

9. The method according to claim 5 or 7, wherein the first DCI further carries the scheduled uplink bandwidth and the quantity of uplink data flows that are used by the terminal device.

10. The method according to claim 9, wherein the first DCI comprises a preset field, and the preset field indicates the quantity of uplink data flows of the terminal device; or the first DCI comprises a transmitted precoding matrix indicator TPMI field, and the TPMI field indicates the quantity of uplink data flows of the terminal device.

11. The method according to claim 6, wherein when the RAN device determines that the precoding indication manner used by the terminal device is the wideband precise indication manner, the method further comprises:

determining, by the RAN device, M subbands from a plurality of subbands in the scheduled uplink bandwidth of the terminal device, wherein M is an integer greater than 0;
obtaining, by the RAN device, first precoding on each of the M subbands;
processing, by the RAN device, a to-be-sent CSI-RS on each subband by using the first precoding on each subband, to obtain a first signal; and

sending, by the RAN device, the first signal to the terminal device on the M subbands.

12. The method according to claim 11, wherein the M subbands in the scheduled uplink bandwidth are agreed upon by the RAN device and the terminal device, or the M subbands are subbands with a largest signal-to-noise ratio in the plurality of subbands in the scheduled uplink bandwidth.

13. A precoding indication manner determining method, comprising:

receiving, by a terminal device, first information from a radio access network RAN device, wherein the first information indicates a corresponding uplink precoding indication manner; obtaining, by the terminal device, the uplink precoding indication manner of the terminal device based on the first information; and determining, by the terminal device, uplink precoding in the uplink precoding indication manner.

14. The method according to claim 13, wherein before the receiving, by a terminal device, first information from a radio access network RAN device, the method further comprises:

sending, by the terminal device, a channel sounding reference signal SRS to the RAN device, wherein the SRS is used to determine information about an uplink channel of the terminal device.

15. The method according to claim 13, wherein the first information comprises first downlink control information DCI, the first DCI carries 2-bit information, and the 2-bit information indicates the uplink precoding indication manner used by the terminal device.

16. The method according to claim 15, wherein the first DCI comprises a preset field, and the preset field indicates a quantity of uplink data flows of the terminal device; or the first DCI comprises a transmitted precoding matrix indicator TPMI field, and the TPMI field indicates a quantity of uplink data flows of the terminal device.

17. The method according to claim 15 or 16, wherein the first DCI further carries a scheduled uplink bandwidth and the quantity of uplink data flows that are used by the terminal device.

18. The method according to claim 15 or 16, wherein the first DCI further carries first indication information indicating an index of a codebook used by the terminal device.

19. The method according to claim 15, wherein the first information comprises configuration information of an aperiodic channel state information-reference signal CSI-RS, and the CSI-RS is used by the terminal device to determine the to-be-used uplink precoding.

20. The method according to claim 15, wherein the first DCI is used to notify the RAN device whether to send a CSI-RS.

21. The method according to claim 13, wherein when the uplink precoding indication manner of the terminal device obtained by the terminal device is a wideband precise indication manner, the method further comprises:
receiving, by the terminal device, M second signals sent by the RAN device, wherein the M second signals are signals obtained by performing downlink channel processing on M first signals, the M first signals are obtained by the RAN device by processing CSI-RSs by using first precoding on M subbands in a scheduled uplink bandwidth, and M is an integer greater than 0; determining, by the terminal device, M equivalent channel matrices based on the M second signals and the CSI-RSs, wherein the equivalent channel matrix is equal to a product of a downlink channel matrix and the first precoding; and using, by the terminal device, an average value of the M equivalent channel matrices as the uplink precoding of the terminal device.

22. The method according to claim 21, wherein the M subbands in the scheduled uplink bandwidth are agreed upon by the RAN device and the terminal device, or the M subbands are subbands with a largest signal-to-noise ratio in a plurality of subbands in the scheduled uplink bandwidth.

23. A communication apparatus, comprising a transceiver module and a processing module, wherein

the transceiver module is configured to obtain information about an uplink channel of a terminal device;
the processing module is configured to determine a scheduled uplink bandwidth and a quantity of uplink data flows of the terminal device based on the information about the uplink channel of the terminal device;
the processing module is further configured to determine an uplink precoding indication manner of the terminal device based on the scheduled uplink bandwidth and the quantity of uplink data flows of the terminal device; and

the transceiver module is further configured to send first information to the terminal device, wherein the first information indicates the uplink precoding indication manner.

24. The apparatus according to claim 23, wherein when determining the uplink precoding indication manner of the terminal device based on the scheduled uplink bandwidth and the quantity of uplink data flows of the terminal device, the processing module is specifically configured to:

determine, based on the scheduled uplink bandwidth and the quantity of uplink data flows of the terminal device and according to a first rule, the uplink precoding indication manner used by the terminal device, wherein the first rule comprises:

when the scheduled uplink bandwidth of the terminal device is less than a first threshold and the quantity of uplink data flows of the terminal device is less than a second threshold, determining that the terminal device uses a wideband codebook indication manner; or

when the scheduled uplink bandwidth of the terminal device is greater than a first threshold and the quantity of uplink data flows of the terminal device is less than a second threshold, determining that the terminal device uses a subband codebook indication manner; or

when the scheduled uplink bandwidth of the terminal device is less than a first threshold and the quantity of uplink data flows of the terminal device is greater than a second threshold, determining that the terminal device uses a wideband precise indication manner; or

when the scheduled uplink bandwidth of the terminal device is greater than a first threshold and the quantity of uplink data flows of the terminal device is greater than a second threshold, determining that the terminal device uses a subband precise indication manner; or

when the scheduled uplink bandwidth of the terminal device is equal to a first threshold and the quantity of uplink data flows of the terminal device is less than a second threshold, determining that the terminal device uses either of a wideband codebook indication manner and a subband codebook indication manner; or

when the scheduled uplink bandwidth of the terminal device is less than a first threshold and the quantity of uplink data flows of the terminal device is equal to a second threshold, determining that the terminal device uses either of a wideband codebook indication manner and a wideband precise indication manner; or

when the scheduled uplink bandwidth of the terminal device is equal to a first threshold and the quantity of uplink data flows of the terminal device is greater than a second threshold, determining that the terminal device uses either of a wideband precise indication manner and a subband precise indication manner; or

when the scheduled uplink bandwidth of the terminal device is greater than a first threshold and the quantity of uplink data flows of the terminal device is equal to a second threshold, determining that the terminal device uses either of a subband codebook indication manner and a subband precise indication manner; or

when the scheduled uplink bandwidth of the terminal device is equal to a first threshold and the quantity of uplink data flows of the terminal device is equal to a second threshold, determining that the terminal device uses any one of a wideband codebook indication manner, a subband codebook indication manner, a wideband precise indication manner, and a subband precise indication manner.

25. The apparatus according to claim 23 or 24, wherein the processing module is further configured to: determine information about uplink precoding of the terminal device based on the information about the uplink channel of the terminal device.

26. The apparatus according to claim 23, wherein when obtaining the information about the uplink channel of the terminal device, the transceiver module is specifically configured to:

receive a channel sounding reference signal SRS from the terminal device; and

determine the information about the uplink channel of the terminal device based on the SRS sent by the terminal device.

27. The apparatus according to claim 24, wherein when the processing module determines that the precoding indication manner used by the terminal device is the wideband codebook indication manner or the subband codebook indication manner, the first information comprises first downlink control information DCI, and the first DCI carries first indication information indicating an index of a codebook used by the terminal device.

28. The apparatus according to claim 24, wherein when the processing module determines that the precoding indication manner used by the terminal device is the wideband precise indication manner or the subband precise indication manner, the first information comprises configuration information of an aperiodic channel state information-reference signal CSI-RS, and the CSI-RS is used by the terminal device to determine to-be-used uplink precoding.

29. The apparatus according to claim 27, wherein the first DCI is used to notify the transceiver module whether to send a CSI-RS.

30. The apparatus according to claim 27 or 29, wherein the first DCI carries 2-bit information, and the 2-bit information indicates the uplink precoding indication manner used by the terminal device.

31. The apparatus according to claim 27 or 29, wherein the first DCI further carries the scheduled uplink bandwidth and the quantity of uplink data flows that are used by the terminal device.

32. The apparatus according to claim 31, wherein the first DCI comprises a preset field, and the preset field indicates the quantity of uplink data flows of the terminal device; or the first DCI comprises a transmitted precoding matrix indicator TPMI field, and the TPMI field indicates the quantity of uplink data flows of the terminal device.

33. The apparatus according to claim 28, wherein when the processing module determines that the precoding indication manner used by the terminal device is the wideband precise indication manner, the processing module is further configured to: determine M subbands from a plurality of subbands in the scheduled uplink bandwidth of the terminal device, wherein M is an integer greater than 0; obtain first precoding on each of the M subbands; process a to-be-sent CSI-RS on each subband by using the first precoding on each subband, to obtain a first signal; and send the first signal to the terminal device on the M subbands.

34. The apparatus according to claim 33, wherein the M subbands in the scheduled uplink bandwidth are agreed upon by the apparatus and the terminal device, or the M subbands are subbands with a largest signal-to-noise ratio in the plurality of subbands in the scheduled uplink bandwidth.

35. A communication apparatus, comprising a transceiver module and a processing module, wherein

the transceiver module is configured to receive first information from a radio access network RAN device, wherein the first information indicates a corresponding uplink precoding indication manner;
the processing module is configured to obtain the uplink precoding indication manner of the apparatus based on the first information; and
the processing module is further configured to determine uplink precoding in the uplink precoding indication manner.

36. The apparatus according to claim 35, wherein the transceiver module is further configured to: before receiving the first information from the radio access network RAN device, send a channel sounding reference signal SRS to the RAN device, wherein the SRS is used to determine information about an uplink channel of the apparatus.

37. The apparatus according to claim 35, wherein the first information comprises first downlink control information DCI, the first DCI carries 2-bit information, and the 2-bit information indicates the uplink precoding indication manner used by the apparatus.

38. The apparatus according to claim 37, wherein the first DCI comprises a preset field, and the preset field indicates a quantity of uplink data flows of the apparatus; or the first DCI comprises a transmitted precoding matrix indicator TPMI field, and the TPMI field indicates a quantity of uplink data flows of the apparatus.

39. The apparatus according to claim 37 or 38, wherein the first DCI further carries a scheduled uplink bandwidth and the quantity of uplink data flows that are used by the apparatus.

40. The apparatus according to claim 37 or 38, wherein the first DCI further carries first indication information indicating an index of a codebook used by the apparatus.

41. The apparatus according to claim 37, wherein the first information comprises configuration information of an aperiodic channel state information-reference signal CSI-RS, and the CSI-RS is used by the apparatus to determine the to-be-used uplink precoding.

42. The apparatus according to claim 37, wherein the first DCI is used to notify the RAN device whether to send a CSI-RS.

43. The apparatus according to claim 35, wherein when the uplink precoding indication manner of the apparatus obtained by the transceiver module is a wideband precise indication manner, the transceiver module is further configured to: receive M second signals sent by the RAN device, wherein the M second signals are signals obtained by performing downlink channel processing on M first signals, the M first signals are obtained by the RAN device by processing CSI-RSs by using first precoding on M subbands in a scheduled uplink bandwidth, and M is an integer greater than 0; determine M equivalent channel matrices based on the M second signals and the CSI-RSs by using the processing module, wherein the equivalent channel matrix is equal to a product of a downlink channel matrix and the first precoding; and use an average value of the M equivalent channel matrices as the uplink precoding of the apparatus.

44. The apparatus according to claim 43, wherein the M subbands in the scheduled uplink bandwidth are agreed upon by the RAN device and the apparatus, or the M subbands are subbands with a largest signal-to-noise ratio in a plurality of subbands in the scheduled uplink bandwidth.

45. A communication apparatus, comprising a processor coupled to a memory, wherein the memory is configured to store a computer program, and the processor is configured to execute the computer program stored in the memory, so that the communication apparatus performs the method according to any one of claims 1 to 12.

46. A communication apparatus, comprising a processor coupled to a memory, wherein the memory is configured to store a computer program, and the processor is configured to execute the computer program stored in the memory, so that the communication apparatus performs the method according to any one of claims 13 to 22.

47. A computer-readable storage medium, storing a computer program, wherein when the computer program is run on a processor, the method according to any one of claims 1 to 12 is performed, or the method according to any one of claims 13 to 22 is performed.

48. A computer program product comprising instructions, wherein when the computer program product runs on a computer, the method according to any one of claims 1 to 12 is performed, or the method according to any one of claims 13 to 22 is performed.

TRP 1                                    TRP 2

UE 4

UE 3

UE 1                                     UE 5

UE 2

FIG. 1

| Wideband precoding | → | Subband precoding |

Codebook based uplink precoding indication

Non-codebook based uplink precoding indication

Uplink subband precoding high-precision indication based on a beamformed CSI-RS

FIG. 2

RAN device

RRC

MAC

PHY

Terminal device

RRC

MAC

PHY

1. RRC signaling interaction

2. MAC-CE signaling interaction

3. PDCCH and PDSCH

4. PUCCH and PUSCH

FIG. 3

| RAN device | Terminal device |
|---|---|

S401: Obtain information about an uplink channel of the terminal device

S402: Determine a scheduled uplink bandwidth and a quantity of uplink data flows of the terminal device based on the information about the uplink channel of the terminal device

S403: Determine an uplink precoding indication manner of the terminal device based on the scheduled uplink bandwidth and the quantity of uplink data flows of the terminal device

S404: First information

S405: Obtain, based on the first information, the uplink precoding indication manner used by the terminal device

S406: Determine uplink precoding in the uplink precoding indication manner

FIG. 4

0 MHz          x MHz

| | Wideband codebook indication manner | Subband codebook indication manner | |
|---|---|---|---|
| Wideband precise indication manner | | Subband precise indication manner | |

Quantity of data flows is 1

Quantity of data flows is y

Scheduled uplink bandwidth

Quantity of data flows

FIG. 5

First subband          Middle subband          Last subband

When M=1

(a)

When M is greater than 1

(b)

FIG. 6

RAN device

$$H_k^{UL} \longrightarrow P_k^{UL}$$

Step 2: Select M subbands and separately calculate corresponding to each subband

Step 1: Send an SRS

Step 3: Send DCI

Step 4: Send a precoded CSI-RS

Step 7: Send precoded data

Terminal device

Step 5: Estimate an equivalent channel based on the CSI-RS

Step 6: Use an average value of equivalent channels on the M sububands as uplink precoding

FIG. 7

Communication apparatus 800

802

Transceiver module

801

Processing module

803

Storage module

FIG. 8

Communication apparatus 900

910

920

Transceiver

Processor

Transmitter
911

913

930

Receiver
912

Memory

FIG. 9

Communication apparatus 1000

Processor 1002

Interface circuit 1001

Memory 1003

FIG. 10

## INTERNATIONAL SEARCH REPORT

| International application No. |
| --- |
| **PCT/CN2022/138410** |

### A. CLASSIFICATION OF SUBJECT MATTER

H04B7/0456(2017.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 预编码, 指示, 上行, 下行控制信息, 数据流, 秩, 传输层数, 带宽, 调度, 子带, 码本, 阈值, 门限, precode, indicate, uplink, DCI, data flow, RANK, transmission layer, bandwidth, schedule, subband, codebook, threshold

### C. DOCUMENTS CONSIDERED TO BE RELEVANT

| Category* | Citation of document, with indication, where appropriate, of the relevant passages | Relevant to claim No. |
| --- | --- | --- |
| X | WO 2021254506 A1 (HUAWEI TECHNOLOGIES CO., LTD.) 23 December 2021 (2021-12-23) description, page 1, paragraph 5 to page 10, paragraph 9 | 13-20, 35-42, 46-48 |
| X | WO 2018214116 A1 (GUANGDONG OPPO MOBILE COMMUNICATIONS CO., LTD.) 29 November 2018 (2018-11-29) description, page 2, paragraph 4 to page 16, paragraph 6 | 13-20, 35-42, 46-48 |
| A | CN 110971275 A (TELECOMMUNICATIONS TECHNOLOGY RESEARCH INSTITUTE CO., LTD.) 07 April 2020 (2020-04-07) entire document | 1-48 |
| A | US 2020076484 A1 (SAMSUNG ELECTRONICS CO., LTD.) 05 March 2020 (2020-03-05) entire document | 1-48 |
| A | NOKIA et al. "Non-codebook based UL-MIMO Transmission" *3GPP TSG-RAN WG1#90 R1-1714236*, 11 August 2017 (2017-08-11), entire document | 1-48 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 February 2023** | **17 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/138410** |

| Patent document cited in search report | | | Publication date (day/month/year) | Patent family member(s) | | | Publication date (day/month/year) |
| --- | --- | --- | --- | --- | --- | --- | --- |
| WO | 2021254506 | A1 | 23 December 2021 | CN | 113824481 | A | 21 December 2021 |
| WO | 2018214116 | A1 | 29 November 2018 | TW | 201902261 | A | 01 January 2019 |
| | | | | EP | 3614773 | A1 | 26 February 2020 |
| | | | | EP | 3614773 | A4 | 22 April 2020 |
| | | | | EP | 3614773 | B1 | 02 June 2021 |
| | | | | ES | 2879840 | T3 | 23 November 2021 |
| | | | | US | 2021320770 | A1 | 14 October 2021 |
| | | | | JP | 2020521381 | A | 16 July 2020 |
| | | | | JP | 7142031 | B2 | 26 September 2022 |
| | | | | EP | 3866546 | A1 | 18 August 2021 |
| | | | | RU | 2736872 | C1 | 23 November 2020 |
| | | | | CA | 3063782 | A1 | 29 November 2018 |
| | | | | CA | 3063782 | C | 12 October 2021 |
| | | | | KR | 20200012868 | A | 05 February 2020 |
| | | | | KR | 102305169 | B1 | 27 September 2021 |
| | | | | ZA | 201908151 | B | 30 September 2020 |
| | | | | AU | 2017415185 | A1 | 12 December 2019 |
| | | | | AU | 2017415185 | B2 | 22 September 2022 |
| | | | | US | 2020083998 | A1 | 12 March 2020 |
| | | | | US | 11082180 | B2 | 03 August 2021 |
| | | | | BR | 112019024251 | A2 | 02 June 2020 |
| | | | | MX | 2019013992 | A | 05 February 2020 |
| | | | | PH | 12019502570 | A1 | 20 July 2020 |
| | | | | TW | 771412 | B1 | 21 July 2022 |
| | | | | SG | 11201910831 | A1 | 30 December 2019 |
| | | | | IN | 201917051260 | A | 24 January 2020 |
| | | | | VN | 68973 | A | 25 February 2020 |
| | | | | CN | 110622607 | A | 27 December 2019 |
| | | | | CN | 110868283 | A | 06 March 2020 |
| | | | | CN | 110868283 | B | 05 March 2021 |
| CN | 110971275 | A | 07 April 2020 | EP | 3859989 | A1 | 04 August 2021 |
| | | | | EP | 3859989 | A4 | 17 November 2021 |
| | | | | TW | 202013904 | A | 01 April 2020 |
| | | | | KR | 20210068107 | A | 08 June 2021 |
| | | | | US | 2021399773 | A1 | 23 December 2021 |
| | | | | US | 11342972 | B2 | 24 May 2022 |
| | | | | WO | 2020063365 | A1 | 02 April 2020 |
| | | | | CN | 110971275 | B | 23 November 2021 |
| | | | | TW | 718686 | B1 | 11 February 2021 |
| | | | | IN | 202127017317 | A | 10 September 2021 |
| US | 2020076484 | A1 | 05 March 2020 | US | 11316564 | B2 | 26 April 2022 |
| | | | | KR | 20180119265 | A | 02 November 2018 |
| | | | | KR | 102331127 | B1 | 26 November 2021 |
| | | | | WO | 2018199551 | A1 | 01 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111672970